(19) **Europäisches Patentamt European Patent Office Office européen des brevets**

(11) **EP 3 562 979 B1**

(12) **EUROPEAN PATENT SPECIFICATION**

(45) Date of publication and mention of the grant of the patent:
**24.01.2024 Bulletin 2024/04**

(21) Application number: **17887280.0**

(22) Date of filing: **29.12.2017**

(51) International Patent Classification (IPC):
**D01D 5/08** (2006.01)  **D01F 1/07** (2006.01)
**C08L 81/02** (2006.01)  **D04H 3/009** (2012.01)
**D01D 5/098** (2006.01)  **D04H 3/16** (2006.01)
**D04H 1/4326** (2012.01)  **D04H 1/56** (2006.01)
**D01D 10/02** (2006.01)  **D01F 6/76** (2006.01)

(52) Cooperative Patent Classification (CPC):
**D01D 5/0985; C08L 81/02; D01D 10/02; D01F 6/765; D04H 1/4326; D04H 1/56; D04H 3/009; D04H 3/16**

(86) International application number:
**PCT/US2017/068854**

(87) International publication number:
**WO 2018/126085 (05.07.2018 Gazette 2018/27)**

(54) **DIMENSIONALLY-STABLE, FIRE-RESISTANT MELT-BLOWN FIBERS AND NONWOVEN STRUCTURES INCLUDING A FLAME RETARDING POLYMER**

FORMSTABILE FEUERFESTE SCHMELZGEBLASENE FASERN UND VLIESSTOFFE, STRUKTUREN MIT EINEM FLAMMHEMMENDEN POLYMER

FIBRES OBTENUES PAR FUSION-SOUFFLAGE, DIMENSIONNELLEMENT STABLES ET RÉSISTANTES AU FEU, ET STRUCTURES NON TISSÉES COMPRENANT UN POLYMÈRE RETARDATEUR DE FLAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2016 US 201662439997 P**

(43) Date of publication of application:
**06.11.2019 Bulletin 2019/45**

(73) Proprietor: **3M Innovative Properties Company St. Paul, MN 55133-3427 (US)**

(72) Inventors:
• **REN, Liyun**
**Saint Paul**
**Minnesota 55133-3427 (US)**
• **WU, Pingfan**
**Saint Paul**
**Minnesota 55133-3427 (US)**
• **ZILLIG, Daniel J.**
**Saint Paul**
**Minnesota 55133-3427 (US)**
• **TALWAR, Sachin**
**Saint Paul**
**Minnesota 55133-3427 (US)**
• **ALEXANDER, Jonathan H.**
**Saint Paul**
**Minnesota 55133-3427 (US)**

(74) Representative: **Mathys & Squire Theatinerstraße 7 80333 München (DE)**

(56) References cited:
**WO-A1-2015/080913**   **WO-A1-2015/080913**
**WO-A2-2013/155420**   **WO-A2-2013/155420**
**JP-A- 2008 238 493**   **JP-A- 2008 238 493**
**JP-A- 2009 228 152**   **JP-A- 2009 228 152**
**US-A- 6 110 589**       **US-A- 6 110 589**

## Description

### Field

The present disclosure relates to melt-blown, fire-resistant fibers including a flame retarding polymer, and more particularly, to dimensionally-stable, fire-resistant, nonwoven fibrous structures including such melt-blown fibers, and methods for preparing such structures.

### Background

Melt blowing is a process for forming nonwoven fibrous webs of thermoplastic (co)polymeric fibers. In a typical melt-blowing process, one or more thermoplastic (co)polymer streams are extruded through a die containing closely arranged orifices and attenuated by convergent streams of high-velocity hot air to form micro-fibers which are collected to form a melt-blown nonwoven fibrous web.

Thermoplastic (co)polymers commonly used in forming conventional melt-blown nonwoven fibrous webs include polyethylene (PE) and polypropylene (PP). Melt-blown nonwoven fibrous webs are used in a variety of applications, including acoustic and thermal insulation, filtration media, surgical drapes, and wipes, among others. Documents US 6 110 589, JP 2008 238493, JP 2009 228152 and WO 2013/155420 disclose relevant background information.

### Summary

One limitation of conventional melt-blown nonwoven fibrous webs is a tendency to shrink when heated to even moderate temperatures in subsequent processing or use, for example, use as a thermal insulation material. Such shrinkage may be particularly problematic when the melt-blown fibers include a thermoplastic polyester (co)polymer; for example poly(ethylene) terephthalate, poly(lactic acid), poly(ethylene) naphthalate, or combinations thereof; which may be desirable in certain applications to achieve higher temperature performance.

Another limitation of such conventional melt-blown nonwoven fibrous webs is that the fibers typically comprise materials which are not fire resistant, generally necessitating the additional of a flame retarding agent (i.e., a flame-retardant) to the fibers if the nonwoven fibrous web is intended for use in an application subject to fire or flame propagation regulations, for example, regulations restricting materials used in passenger vehicle insulation articles. Certain halogenated flame retardants have recently become disfavored due in part to their environmental persistence. Accordingly, it would be desirable to develop a melt-blowing process for producing a fire-resistant, dimensionally stable, melt-blown nonwoven fibrous structure, which is free of halogenated flame retardants..

Thus, according to claim 1, the present disclosure describes a fire-resistant, dimensionally stable, nonwoven fibrous structure including a plurality of staple fibers, wherein the plurality of staple fibers are non-melt-blown fibers and a multiplicity of melt-blown fibers containing a flame retarding polymer. The fire-resistant nonwoven fibrous structure exhibits fire-resistance as demonstrated by passing one or more test selected from UL 94 V0, FAR 25.853, FAR 25.856, AITM20007A, and AITM 3-0005, without any added halogenated flame-retarding agent. Preferably, the flame-retardant nonwoven fibrous structure is dimensionally stable and exhibits a Shrinkage less than 15%.

In certain exemplary embodiments, it may be desirable to include a non-halogenated flame retardant in the nonwoven fibrous structure. In other exemplary embodiments, the melt-blown fibers do not contain a flame retarding agent (i.e a flame-retardant) other than the flame retarding polymer. In certain exemplary embodiments, the melt-blown fibers do not contain a nucleating agent in an amount effective to achieve nucleation.

In another aspect, the present disclosure describes a process for producing a dimensionally stable, melt-blown nonwoven fibrous structure including flame-retardant fibers, and more particularly, a dimensionally stable, flame-retardant, melt-blown nonwoven fibrous structure including a polymer which is flame-retardant.

In some exemplary embodiments, the process includes forming a multiplicity of melt-blown fibers by passing a molten polymer stream including poly(phenylene sulfide) through a multiplicity of orifices of a melt-blowing die, subjecting at least a portion of the melt-blown fibers to a controlled in-flight heat treatment operation immediately upon exit of the melt-blown fibers from the multiplicity of orifices, wherein the controlled in-flight heat treatment operation takes place at a temperature below a melting temperature of the portion of the melt-blown fibers for a time sufficient to achieve stress relaxation of at least a portion of the molecules within the portion of the fibers subjected to the controlled in-flight heat treatment operation, and collecting at least some of the portion of the melt-blown fibers subjected to the controlled in-flight heat treatment operation on a collector to form a non-woven fibrous structure. The nonwoven fibrous structure exhibits a Shrinkage (as determined using the methodology described herein) less than a Shrinkage measured on an identically-prepared structure that is not subjected to the controlled in-flight heat treatment operation.

In other exemplary embodiments, the process includes providing to a melt-blowing die a molten stream including a thermoplastic material including a high proportion (i.e., at least 50 wt. % based on the weight of the melt-blown fibers) of poly(phenylene sulfide, melt-blowing the thermoplastic material into at least one fiber, and subjecting the at least one fiber immediately upon exiting the melt-blowing die and prior to collection as a nonwoven fibrous structure on a collector, to a controlled in-flight heat treatment operation at a temperature below a melting temperature of the poly(phenylene sulfide) for a time sufficient for the nonwoven fibrous structure to exhibit a Shrinkage (when tested using the methodology described herein) less than a Shrinkage measured on an identically-prepared structure that is not subjected to the controlled in-flight heat treatment operation. Preferably, the thermoplastic material does not contain a nucleating agent in an amount effective to achieve nucleation,

**Brief Description of the Drawings**

The disclosure may be more completely understood in consideration of the following detailed description of various embodiments of the disclosure in connection with the accompanying drawings, in which it is to be understood by one of ordinary skill in the art that the drawings illustrate certain exemplary embodiments only, and are not intended as limiting the broader aspects of the present disclosure.

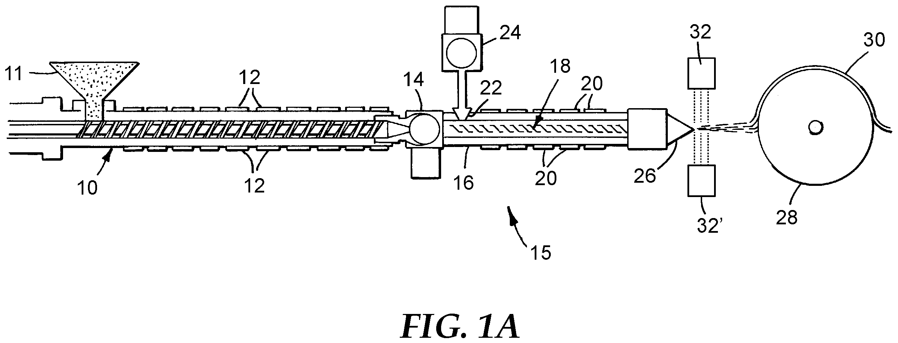

Figure 1A is a schematic overall diagram of an exemplary apparatus for forming melt-blown fibers and in-flight heat-treatment of the melt-blown fibers of exemplary embodiments of the present disclosure.

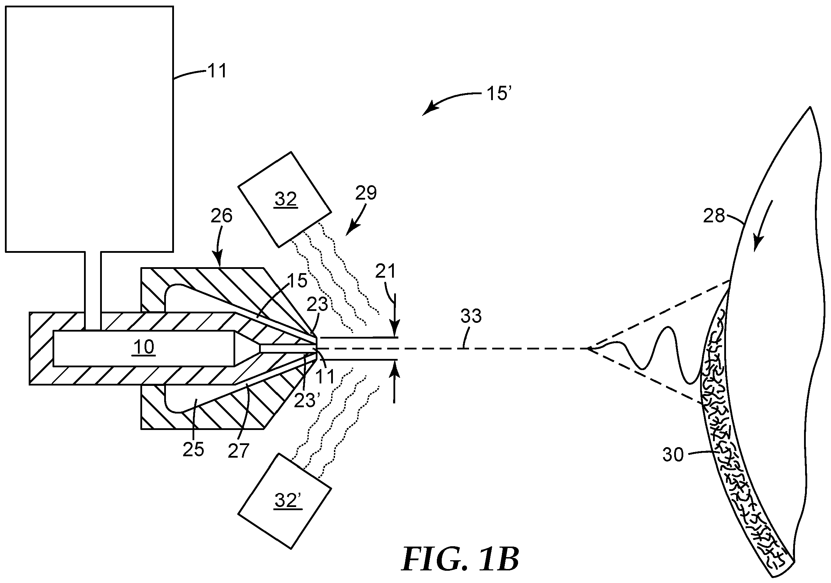

Figure 1B is a schematic overall diagram of another exemplary apparatus for forming melt-blown fibers and in-flight heat-treatment of the melt-blown fibers of exemplary embodiments of the present disclosure.

Repeated use of reference characters in the specification and drawings is intended to represent the same or analogous features or elements of the disclosure. While the above-identified drawings, which may not be drawn to scale, set forth various embodiments of the present disclosure, other embodiments are also contemplated, as noted in the Detailed Description.

**Detailed Description**

In the following detailed description, reference is made to the accompanying set of drawings that form a part of the description hereof and in which are shown by way of illustration several specific embodiments. It is to be understood that other embodiments are contemplated and may be made without departing from the scope or spirit of the present disclosure. The following detailed description, therefore, is not to be taken in a limiting sense.
Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. At the very least, and not as an attempt to limit the application of the doctrine of equivalents to the scope of the claimed embodiments, each numerical parameter should at least be construed in light of the number of reported significant digits and by applying ordinary rounding techniques. In addition, the use of numerical ranges with endpoints includes all numbers within that range (e.g. 1 to 5 includes 1, 1.5, 2, 2.75, 3, 3.80, 4, and 5) and any narrower range or single value within that range.

<u>**Glossary**</u>:

Certain terms are used throughout the description and the claims that, while for the most part are well known, may require some explanation. It should be understood that, as used herein:
The terms "about," "approximate," or "approximately" with reference to a numerical value or a geometric shape means +/- five percent of the numerical value or the value of the internal angle between adjoining sides of a geometric shape having a commonly recognized number of sides, expressly including any narrower range within the +/- five percent of the numerical or angular value, as well as the exact numerical or angular value. For example, a temperature of "about" 100°C refers to a temperature from 95°C to 105°C, but also expressly includes any narrower range of temperature or even a single temperature within that range, including, for example, a temperature of exactly 100°C.
The term "substantially" with reference to a property or characteristic means that the property or characteristic is exhibited to within 2% of that property or characteristic, but also expressly includes any narrow range within the two percent range of the property or characteristic, as well as the exact value of the property or characteristic. For example, a substrate that is "substantially" transparent refers to a substrate that transmits 98-100% of incident light.
The terms "a", "an", and "the" include plural referents unless the content clearly dictates otherwise. Thus, for example, reference to a material containing "a compound" includes a mixture of two or more compounds.
The term "or" is generally employed in its sense including "and/or" unless the content clearly dictates otherwise.

The term "(co)polymer" means a relatively high molecular weight material having a molecular weight of at least about 10,000 g/mole (in some embodiments, in a range from 10,000 g/mole to 5,000,000 g/mole). The terms "(co)polymer" or "(co)polymers" includes homopolymers and copolymers, as well as homopolymers or copolymers that may be formed in a miscible blend, *e.g.,* by co-extrusion or by reaction, including, *e.g.,* transesterification. The term "(co)polymer" includes random, block and star (e.g. dendritic) (co)polymers.

The terms "melt-blowing" and "melt-blown process" mean a method for forming a nonwoven fibrous web by extruding a molten fiber-forming material comprising on or more thermoplastic (co)polymer(s) through at least one or a plurality of orifices to form filaments while contacting the filaments with air or other attenuating fluid to attenuate the filaments into discrete fibers, and thereafter collecting the attenuated fibers. An exemplary meltblowing process is taught in, for example, U.S. Patent No. 6,607,624 (Berrigan et al.).

The term "melt-blown fibers" means fibers prepared by a melt-blowing or melt-blown process. The term is used in general to designate discontinuous fibers formed from one or more molten stream(s) of one or more thermoplastic (co)polymer(s) that are extruded from one or more orifice(s) of a melt-blowing die and subsequently cooled to form solidified fibers and webs comprised thereof. These designations are used for convenience of description only. In processes as described herein, there may be no firm dividing line between partially solidified fibers, and fibers which still comprise a slightly tacky and/or semi-molten surface.

The term "die" means a processing assembly including at least one orifice for use in polymer melt processing and fiber extrusion processes, including but not limited to melt-blowing.

The term "discontinuous" when used with respect to a fiber or collection of fibers means fibers having a finite aspect ratio (e.g., a ratio of length to diameter of e.g., less than about 10,000).

The term "oriented" when used with respect to a fiber means that at least portions of the (co)polymer molecules within the fibers are aligned with the longitudinal axis of the fibers, for example, by use of a drawing process or attenuator upon a stream of fibers exiting from a die.

The terms "nonwoven fibrous web" or "nonwoven web" mean a collection of fibers characterized by entanglement or point bonding of the fibers to form a sheet or mat exhibiting a structure of individual fibers or filaments which are interlaid, but not in an identifiable manner as in a knitted fabric.

The term "mono-component" when used with respect to a fiber or collection of fibers means fibers having essentially the same composition across their cross-section; mono-component includes blends (viz., (co)polymer mixtures) or additive-containing materials, in which a continuous phase of substantially uniform composition extends across the cross-section and over the length of the fiber.

The term "directly collected fibers" describes fibers formed and collected as a web in essentially one operation, by extruding molten fibers from a set of orifices and collecting the at least partially solidified fibers as fibers on a collector surface without the fibers or fibers contacting a deflector or the like between the orifices and the collector surface.

The term "pleated" describes a nonwoven fibrous structure or web wherein at least portions of which have been folded to form a configuration comprising rows of generally parallel, oppositely oriented folds. As such, the pleating of a nonwoven fibrous structure or web as a whole is distinguished from the crimping of individual fibers.

The term "self-supporting" with respect to a nonwoven fibrous structure (e.g., a nonwoven fibrous web, and the like) describes that the structure does not include a contiguous reinforcing layer of wire, mesh, or other stiffening material even if a pleated filter element containing such matrix may include tip stabilization (e.g., a planar wire face layer) or perimeter reinforcement (e.g., an edge adhesive or a filter frame) to strengthen selected portions of the filter element. Alternatively, or in addition, the term "self-supporting" describes a filter element that is deformation resistant without requiring stiffening layers, bi-component fibers, adhesive or other reinforcement in the filter media.

The term "web basis weight" is calculated from the weight of a 10 cm × 10 cm web sample, and is usually expressed in grams per square meter (gsm).

The term "web thickness" is measured on a 10 cm × 10 cm web sample using a thickness testing gauge having a tester foot with dimensions of 5 cm × 12.5 cm at an applied pressure of 150 Pa.

The term "bulk density" is the mass per unit volume of the bulk polymer or polymer blend that makes up the web, taken from the literature.

The term "Solidity" is a nonwoven web property inversely related to density and characteristic of web permeability and porosity (low Solidity corresponds to high permeability and high porosity), and is defined by the equation:

$$\text{Solidity } (\%) = \frac{[3.937 * \text{Web Basis Weight } (g/m^2)]}{[\text{Web Thickness (mils)} * \text{Bulk Density } (g/cm^3)]}$$

The term "median Fiber Diameter" of fibers in a given nonwoven melt-blown fibrous structure (e.g., web) or population of component is determined by producing one or more images of the fiber structure, such as by using a scanning electron microscope; measuring the fiber diameter of clearly visible fibers in the one or more images resulting in a total number of fiber diameters, $x$; and calculating the median fiber diameter of the $x$ fiber diameters. Typically, $x$ is greater than about 50, and desirably ranges from about 50 to about 2. However, in some cases, x may be selected to be as low as 30 or even 20. These lower values of x may be particularly useful for large diameter fibers, or for highly entangled fibers.

The term "Nominal Melting Point" for a (co)polymer or a (co)polymeric fiber or fibrous web corresponds to the temperature at which the peak maximum of a first-heat total-heat flow plot obtained using modulated differential scanning calorimetry (MDSC) as described herein, occurs in the melting region of the (co)polymer or fiber if there is only one maximum in the melting region; and, if there is more than one maximum indicating more than one Nominal Melting Point (e.g., because of the presence of two distinct crystalline phases), as the temperature at which the highest-amplitude melting peak occurs.

The term "particulate" and "particle" are used substantially interchangeably. Generally, a particulate or particle means a small distinct piece or individual part of a material in finely divided form. However, a particulate may also include a collection of individual particulates associated or clustered together in finely divided form. Thus, individual particulates used in certain exemplary embodiments of the present disclosure may clump, physically intermesh, electrostatically associate, or otherwise associate to form particulates. In certain instances, particulates in the form of agglomerates of individual particulates may be intentionally formed such as those described in U.S. Patent No. 5,332,426 (Tang et al.).

The term "porous" with reference to a melt-blown nonwoven fibrous structure or web means air-permeable. The term "porous" with reference to a particulate means gas- or liquid-permeable.

The term "particulate loading" or a "particulate loading process" means a process in which particulates are added to a fiber stream or web while it is forming. Exemplary particulate loading processes are taught in, for example, U.S. Patent Nos. 4,818,464 (Lau) and 4,100,324 (Anderson et al.).

The term "particulate-loaded media" or "particulate-loaded nonwoven fibrous web" means a nonwoven web having an open-structured, entangled mass of discrete fibers, containing particulates enmeshed within or bonded to the fibers, the particulates being chemically active.

The term "enmeshed" means that particulates are dispersed and physically held in the fibers of the web. Generally, there is point and line contact along the fibers and the particulates so that nearly the full surface area of the particulates is available for interaction with a fluid.

Various exemplary embodiments of the disclosure will now be described with particular reference to the Drawings. Exemplary embodiments of the present disclosure may take on various modifications and alterations without departing from the spirit and scope of the disclosure. Accordingly, it is to be understood that the embodiments of the present disclosure are not to be limited to the following described exemplary embodiments, but are to be controlled by the limitations set forth in the claims and any equivalents thereof.

The present disclosure describes a process and related apparatus for making fire-resistant, dimensionally stable melt-blown nonwoven fibrous structures (e.g., mats, webs, sheets, scrims, fabrics, etc.) with fibers comprising, consisting essentially of, or consisting of poly(phenylene sulfide) and optionally one or a combination of semi-crystalline polyester (co)polymers.

Before the apparatus and process of the present disclosure, it was difficult to melt blow thermoplastic (co)polymer fibers comprising a polyester (co)polymer, especially such fibers having a diameter or thickness of less than about 10 micrometers. To melt blow such fibers, the corresponding thermoplastic polyester (co)polymer generally has to be heated to temperatures much higher than its Nominal Melting Point.

Such elevated heating of the thermoplastic polyester (co)polymer can result in one or any combination of problems that can include, for example, excessive degradation of the (co)polymer, weak and brittle fiber webs, and formation of granular (co)polymeric material (commonly referred to as "sand") during melt-blowing. Even when melt-blown polyester (co)polymer fibers were produced using convention processes, fibrous webs and other fibrous structures made with such fibers typically exhibit excessive shrinkage or otherwise poor dimensional stability at temperatures equal to or above the glass transition temperature of the polyester (co)polymer(s) used to make the fibers.

The present inventors have discovered a way to melt blow fibers and form dimensionally-stable, fire-resistant melt-blown nonwoven fibrous structures (*e.g.*, webs), using a thermoplastic (co)polymer comprising poly(phenylene sulfide) and optionally at least one thermoplastic semi-crystalline polyester (co)polymer or a plurality of thermoplastic semi-crystalline polyester (co)polymers.

Such fibers exhibit several desirable properties including, for example, one or any combination of: relatively low cost (e.g., manufacturing and/or raw material costs), durability, reduced shrinkage from heat exposure, increased dimensional stability at elevated temperature, fire-resistance or flame-retardant properties, and reduced smoke generation and smoke toxicity in a fire. The present disclosure can also be used to provide environmentally benign non-halogenated fire-resistant polyester-based nonwoven fibrous structures.

Because the melt-blown fibers are made with (co)polymer materials that are dimensionally stable at elevated temperatures, non-woven fibrous structures (e.g., mats, webs, sheets, scrims, fabrics, etc.) made with such fibers, and articles (e.g., thermal and acoustic insulation and insulating articles, liquid and gas filters, garments, and personal protection equipment) made from such fibrous structures, can be used in relatively high temperature environments while exhibiting only minor, if any, amounts of shrinkage. The development of dimensionally stable fire-resistant melt-blown nonwoven fibrous structures (*e.g.*, webs) which will not shrink significantly upon exposure to heat as provided by embodiments of the present disclosure, widens the usefulness and industrial applicability of such webs. Such melt-blown micro-fiber webs can be particularly useful as thermal insulation articles and high temperature acoustical insulation articles.

## Nonwoven Fibrous Structures

In one aspect, the present disclosure provides nonwoven fibrous structure comprising a plurality of melt-blown fibers comprising poly(phenylene sulfide) in an amount sufficient for the nonwoven fibrous structure to exhibit fire-resistance by passing one or more test selected from UL 94 V0, FAR 25.853 (a), FAR 25.856 (a), AITM20007A, and AITM 3-0005, without any added halogenated flame-retardant additive. The nonwoven fibrous structure is dimensionally stable and exhibits a Shrinkage less than 15%. In certain exemplary embodiments, the plurality of melt-blown fibers do not contain a nucleating agent in an amount effective to achieve nucleation.

The nonwoven fibrous structure may take a variety of forms, including mats, webs, sheets, scrims, fabrics, and a combination thereof. Following in-flight heat treatment and collection of the melt-blown fibers as a nonwoven fibrous structure, as described further below, the nonwoven fibrous structure exhibits a Shrinkage (as determined using the Shrinkage test method described below) less than about 15%, 14%, 13%, 12%, 11%, 10%, 9%, 8%, 7%, 6%, 5%, 4%, 3%, 2% or even 1%.

### Melt-blown Fibers

Melt-blown nonwoven fibrous structures or webs of the present disclosure generally include melt-blown fibers that may be regarded as discontinuous fibers. However, depending on the operating parameters chosen, e.g., degree of solidification from the molten state, the collected fibers may be semi-continuous or essentially discontinuous.

In certain exemplary embodiments, the melt-blown fibers of the present disclosure may be oriented (i.e., molecularly oriented).

In some exemplary embodiments, the melt-blown fibers in the non-woven fibrous structures or webs may exhibit a median Fiber Diameter (determined using the test method described below) of no more than about 10 micrometers ($\mu$m), 9 $\mu$m, 8 $\mu$m, 7 $\mu$m, 5 $\mu$m, 4 $\mu$m, 3 $\mu$m, 2 $\mu$m, or even 1 $\mu$m.

In certain such exemplary embodiments, the nonwoven fibrous structure exhibits a Solidity of from about 0.5 % to about 12 %; from about 1 % to about 11 %; from about 1.5 % to about 10 %; from about 2 % to about 9 %; from about 2.5% to about 7.5 %, or even from about 3 % to about 5%.

In other such exemplary embodiments, the nonwoven fibrous structure exhibits a basis weight of from 40 grams per square meter (gsm) to about 1,000 gsm; from about 100 gsm to about 900 gsm; from about 150 gsm to about 800 gsm; from about 175 gsm to about 700 gsm; from about 200 gsm to about 600 gsm, or even from about 250 gsm to about 500 gsm.

In further such exemplary embodiments, the nonwoven fibrous structure exhibits a Compressive Strength, as measured using the test method disclosed herein below, greater than 1 kPa, greater than 2 kPa, greater than 3 kPa, greater than 4 kPa, greater than 5 kPa, or even greater than 7.5 kPa; and generally less than 15 kPa, 14 kPa, 13 kPa, 12 kPa, 11 kPa, or 10 kPa.

In additional such exemplary embodiments, the nonwoven fibrous structure exhibits a Maximum Load Tensile Strength, as measured using the test method disclosed herein below, greater than 10 Newtons, greater than 15 Newtons, greater than 20 Newtons, greater than 25 Newtons, or even greater than 30 Newtons; and generally less than 100 Newtons, 90 Newtons, 80 Newtons, 70 Newtons, 60 Newtons, or 50 Newtons.

### Melt-blown Fiber Components

The melt-blown fibers include poly(phenylene) sulfide, and may optionally include additional materials, such as at least one thermoplastic semi-crystalline (co)polymer, or a blend of at least one thermoplastic semi-crystalline polyester (co)polymer and at least one other (co)polymer, to form a (co)polymer blend.

### *Poly(phenylene sulfide)*

Melt-blown nonwoven fibers of the present disclosure comprise poly(phenylene sulfide) (PPS) in an amount sufficient for the nonwoven fibrous structure to exhibit fire-resistance by passing one or more test selected from UL 94 V0, FAR 25.853 (a), FAR 25.856 (a), AITM20007A, and AITM 3-0005, without any added flame-retardant additive (other than the PPS).

Generally, the greater the amount of PPS included in the melt-blown fibers, the greater the fire-resistance of the resulting nonwoven fibrous structure. The amount of PPS included in the melt-blown fibers will depend to some extent on the other components included in the nonwoven fibrous structure, as well as the other components included in the melt-blown nonwoven fibers.

The nonwoven fibrous structures include non-PPS staple fibers in addition to the melt-blown fibers, and the PPS should generally make-up a substantial amount of the melt-blown fibers. In such case, the substantial amount of PPS in the melt-blown fibers may vary from as low as 50 wt. %, 60 wt. %, 70 wt. %, 80 wt. %, or even 90 wt. %, based on the weight of the melt-blown fibers. The maximum amount of PPS in the melt-blown fibers may be 100 wt. %, 90 wt. %, 80 wt. %, 70 wt. %, or even 60 wt. %.

The nonwoven fibrous structures exhibit fire-resistance by passing one or more test selected from UL 94 V0, FAR 25.853 (a), FAR 25.856 (a), AITM20007A, and AITM 3-0005, without any added flame-retardant additive (other than the PPS).

UL 94 V0 is a fire-resistance standard for automotive materials, and requires that burning stop within ten seconds after removal of a flame from a vertical test specimen of the nonwoven fibrous structure.

FAR 25.853 is an aerospace standard for testing the fire-resistance of materials by evaluating the self-extinguishing performance of a test material under fire exposure conditions. In performing the FAR 25.853 test method, a test specimen of defined dimensions is placed vertically and exposed to a standardized horizontal flame source (gas Bunsen burner). For FAR 25.853 (a), the gas Bunsen burner is applied for sixty seconds. For FAR 25.853(b), the gas Bunsen burner is applied for twelve seconds.

FAR 25.853 (a) tests the fire propagation of a vertical 2" × 12" (about 5.1 cm × 30.5 cm) standard test specimen hanging 3/4" (about 1.9 cm) into a 1 1/2" (about 3.8 cm) flame from a standardized horizontal flame source (gas Bunsen burner) for sixty seconds. The requirements to pass FAR 25.853 (a) include:

(1) the test sample self-extinguishes in no more than 15 seconds;
(2) the char length of the test sample is a maximum of 8 inches (20.32 cm); and
(3) the maximum burn time of any drips from the test sample is 5 seconds.

FAR 25.856 is an aerospace standard for testing the fire-resistance of materials by evaluating the self-extinguishing performance of the standard test specimen at high radiant temperatures and fire exposure conditions. The most stringent element of FAR 25.856 is the Radiant Panel Test (RPT) under FAR 25.856 (a), which requires the standard test specimen be exposed to extremely high radiant temperatures and a standardized flame source, while maintained in a vertical position.

In order to pass the Radiant Panel Test under FAR 25.856 (a), the test sample must show less than 2 inches (about 5.1 cm) of flame propagation from the point of flame contact on the test sample, and an after-flame time (*i.e.,* time to self-extinguish after removal of the flame source) of less than three seconds.

AITM20007A, and AITM 3-0005 are industry standard test methods for smoke generation and smoke toxicity of aircraft insulation materials when exposed to a source of fire, as specified by Airbus Industries ABD 0031 (Airbus Industries, Ltd. ), and available at https://www.govmark.com/services/Aerospace-Rail-And-Transportation/airbus-test-list.

PPS resins in slab or pelletized form are produced commercially by a number of manufacturers. The PPS polymer is available in linear or cross-linked (non-linear) form. The linear form of the PPS polymer is generally preferred for melt-blowing fibers, due to its lower melt viscosity and reduced viscoelasticity.

Suitable commercially-available PPS resins include, for example, resins available under the trade names DIC.PPS™ (linear and crosslinked type PPS, available from DIC International (USA) LLC, Parsippany, NJ), DURAFIDE® (linear type PPS available from Polyplastics Co., Ltd, Tokyo, Japan), ECOTRAN® and INITZ® (available from A. Schulman, Co., Akron, OH), FORTRON® (linear type available from Celanese Corporation, Irving, TX ), PETCOAL® (available from Tosoh, Inc., Tokyo, Japan), RYTON® (linear and crosslinked type PPS, available from Solvay Specialty Polymers, Inc., Brussels, Belgium), TEDUR®, (linear type PPS available from Albis Plastics Co., Sugar Land, TX), and TORELINA™ (linear type PPS, available from Toray Industries, Inc., Tokyo, Japan).

*Optional Thermoplastic Semi-crystalline (Co)polymer(s)*

In other exemplary embodiments, the nonwoven fibrous structure of any one of the foregoing embodiments comprises fibers comprising poly(phenylene sulfide) and optionally at least one thermoplastic semi-crystalline (co)polymer, or a blend of at least one thermoplastic semi-crystalline polyester (co)polymer and at least one other (co)polymer, to form a (co)polymer blend.

The at least one thermoplastic semi-crystalline (co)polymer may, in exemplary embodiments, comprise an aliphatic polyester (co)polymer, an aromatic polyester (co)polymer, or a combination thereof. The thermoplastic semi-crystalline (co)polymer comprises, in certain exemplary embodiments, poly(ethylene) terephthalate, poly(butylene) terephthalate, poly(ethylene) naphthalate, poly(lactic acid), poly(hydroxyl) butyrate, poly(trimethylene) terephthalate, or a combination thereof.

Generally, any semi-crystalline fiber-forming (co)polymeric material may be used in preparing fibers and webs of the present disclosure. The thermoplastic (co)polymer material can comprise a blend of a polyester polymer and at least one other polymer to form a polymer blend of two or more polymer phases. It can be desirable for the polyester polymer to be an aliphatic polyester, aromatic polyester or a combination of an aliphatic polyester and aromatic polyester.

Preferably, the thermoplastic semi-crystalline (co)polymer is selected from the group consisting of poly(ethylene) terephthalate, poly(butylene) terephthalate, poly(ethylene) naphthalate, poly(lactic acid), poly(hydroxyl) butyrate, poly(trimethylene) terephthalate, polycarbonate, polyetherimide (PEI), or a combination thereof.

More preferably, the thermoplastic semi-crystalline (co)polymer is one or more thermoplastic, semi-crystalline polyester (co)polymer. Suitable thermoplastic, semi-crystalline polyester (co)polymers include poly(ethylene) terephthalate (PET), poly(lactic acid) (PLA), poly(ethylene) naphthalate (PEN), and combinations thereof. The specific polymers listed here are examples only, and a wide variety of other (co)polymeric or fiber-forming materials are useful.

The thermoplastic polyester (co)polymer can form a substantial portion or phase of the optional thermoplastic (co)polymer material. When the thermoplastic polyester (co)polymer forms a substantial portion of the thermoplastic (co)polymer material, the thermoplastic (co)polymer material can be more readily melt-blown and the resulting fiber(s) exhibits advantageous mechanical properties and thermal properties. For example, a polyester (co)polymer content of at least about 50 wt. %, 60 wt. %, 70 wt. %, 80 wt. %, 90 wt. %, or even 100 wt. % can form a substantial polymer portion or phase of the thermoplastic (co)polymer material.

Acceptable mechanical properties or characteristics can include, *e.g.,* tensile strength, initial modulus, thickness, etc. The fiber can be seen as exhibiting acceptable thermal properties, *e.g.,* when a non-woven web made from the fibers exhibits less than about 30, 25, 20 or 15 percent, and generally less than or equal to about 10 or 5 percent, linear shrinkage when heated to a temperature of about 150°C for about 4 hours.

In some such embodiments, the amount of the thermoplastic semi-crystalline (co)polymer is at least 1 wt. %, 2.5 wt. %, 5 wt. %, 10 wt. %, 15 wt.% or even 20 wt. %; and at most 30 wt. %, 25 wt. %, 20 wt. %, 15 wt. %, 10 wt. %, or even 5 Wt. % based on the total weight of the plurality of melt-blown fibers.

Fibers also may be formed from blends of materials, including materials into which certain additives have been added, such as pigments or dyes. Bi-component fibers, such as core-sheath or side-by-side bi-component fibers, may be used ("bi-component" herein includes fibers with two or more components, each occupying a separate part of the cross-section of the fiber and extending over the length of the fiber).

However, the present disclosure is most advantageous with mono-component fibers, which have many benefits (e.g., less complexity in manufacture and composition; "mono-component" fibers have essentially the same composition across their cross-section; mono-component includes blends or additive-containing materials, in which a continuous phase of uniform composition extends across the cross-section and over the length of the fiber) and can be conveniently bonded and given added bonding capability and/or shaping capability by application of various embodiments of the present disclosure.

In some exemplary embodiments of the present disclosure, different fiber-forming materials may be extruded through different orifices of the extrusion head so as to prepare webs that comprise a mixture of fibers. Staple fibers and/or particulate materials, are introduced into a stream of melt-blown fibers prepared according to the methods of the present disclosure before the fibers are collected or as the fibers are collected, so as to prepare a blended web.

For example, other staple fibers may be blended in the manner taught in U.S. Patent No. 4,118,531; or particulate material may be introduced and captured within the web in the manner taught in U.S. Patent No. 3,971,373; or micro-webs as taught in U.S. Patent No. 4,813,948 may be blended into the webs. Alternatively, fibers prepared by the present disclosure may be introduced into a stream of other fibers to prepare a blend of fibers.

Fibers of substantially circular cross-section are most often prepared, but other cross-sectional shapes may also be used. In general, the fibers having a substantially circular cross-section prepared using a method of the present disclosure may range widely in diameter. Micro-fiber sizes (about 10 micrometers or less in diameter) may be obtained and offer several benefits; but fibers of larger diameter can also be prepared and are useful for certain applications; often the fibers are 20 micrometers or less in diameter. It can be commercially desirable for the fiber diameter to be less than or equal to about 9, 8, 7, 6 or even 5 microns or less. It can even be commercially desirable for the fiber diameter to be 4, 3, 2 or 1 micron or smaller.

*Thermoplastic Non-crystalline (Co)polymers*

In certain exemplary embodiments, the plurality of melt-blown fibers further comprise at least one thermoplastic non-crystalline (co)polymer. In some exemplary embodiments, the plurality of melt-blown fibers include at least one thermoplastic non-crystalline (co)polymer in an amount greater than 1 wt. %, 2 wt. %, 3 wt. %, 4 wt. %, or even 5 wt. % based on the total weight of the plurality of melt-blown fibers. In certain such exemplary embodiments, the plurality of melt-blown fibers include at least one thermoplastic non-crystalline (co)polymer in an amount of at least 1 wt. %, 2 wt. %, 3 wt. %, 4 wt. %, 5 wt. %, 7.5 wt. %, or even 10 wt. %; and at most 15 wt. %, 14 wt. %, 13 wt. %, 12 wt. %, 11 wt. %, or even 10 wt, %, based on the total weight of the plurality of melt-blown fibers.

Optional Nonwoven Fibrous Structure (Web) Components

In further exemplary embodiments, the nonwoven melt-blown fibrous structures of the present disclosure may further comprise one or more optional components. The optional components may be used alone or in any combination suitable for the end-use application of the nonwoven melt-blown fibrous structures. Three non-limiting, currently preferred optional components include optional staple fiber components, optional electret fiber components, and optional particulate components as described further below.

Staple Fiber Component

The nonwoven fibrous web additionally comprises staple fibers. Generally, the staple fibers act as filling fibers, e.g., to reduce the cost or improve the properties of the melt-blown nonwoven fibrous web.

Preferably, the plurality of staple fibers comprise poly(phenylene sulfide) staple fibers, non-heat-stabilized poly(ethylene) terephthalate staple fibers, heat-stabilized poly(ethylene) terephthalate staple fibers, poly(ethylene) naphthalate staple fibers, oxidized poly(acrylonitrile) staple fibers, aromatic polyaramide staple fibers, glass staple fibers, ceramic staple fibers, metal staple fibers, carbon staple fibers, or a combinations thereof.

The size and amount of discrete non-melt-blown filling fibers, if included, used to form the nonwoven fibrous web, will generally depend on the desired properties (i.e., loftiness, openness, softness, drapability) of the nonwoven fibrous web 100 and the desired loading of the chemically active particulate. Generally, the larger the fiber diameter, the larger the fiber length, and the presence of a crimp in the fibers will result in a more open and lofty nonwoven article. Generally, small and shorter fibers will result in a more compact nonwoven article.

The staple fibers may have virtually any cross-sectional shape, but staple fibers having a substantially circular cross-section shape are typical. Generally, the staple fibers are 20 micrometers or less in diameter. The staple fibers may include microfibers (about 10 micrometers or less in diameter) or sub-micrometer fibers (1 micrometer or less in diameter); however, staple fibers of larger diameter can also be prepared and are useful for certain applications.

In some exemplary embodiments, the plurality of staple fibers exhibit a median fiber median diameter less than or equal to about 20, 15, 10, 9, 8, 7, 6, 5, 4, 3, 2 or even 1 micrometer(s) or smaller. In some such exemplary embodiments, the plurality of staple fibers exhibits a median fiber diameter of at least 0.5, 1.0, 2.0, 3.0, 4.0, 5.0, 7.5, or even 10 micrometers.

In further exemplary embodiments, the plurality of staple fibers make-up at least 0 wt. %, 1 wt. %, 5 wt. %, 10 wt. %, 15 wt. %, 20 wt. %, or even 25 wt. % of the weight of the nonwoven fibrous structure. In some such embodiments, the plurality of staple fibers make-up no more than 99 wt. %, 90 wt. %, 80 wt. %, 70 wt. %, 60 wt. %, 50 wt. %, 40 wt. %, 30 wt. %, 20 wt. %, 10 wt. %, or even 5 wt. % of the weight of the nonwoven fibrous structure.

Non-limiting examples of suitable aromatic polyaramide staple fibers include those sold commercially under the brand name NOMEX® by DuPont™ Corp, (Wilmington, DE) and NOMEX-META® by Fiber-Line™ Corp. (Hatfield, PA).

Non-limiting examples of suitable glass staple fibers include those sold commercially under the brand name DECOFIL® by Vetrotex™ Saint-Gobain Corp. (Aachen, Germany), and VITRON® by Johns Manville, Corp. (Wertheim, Germany).

Non-limiting examples of suitable ceramic fibers include any metal oxide, metal carbide, or metal nitride, including but not limited to silicon oxide, aluminum oxide, zirconium oxide, silicon carbide, tungsten carbide, silicon nitride, and the like.

Non-limiting examples of suitable metal fibers include fibers made from any metal or metal alloy, for example, iron, titanium, tungsten, platinum, copper, nickel, cobalt, and the like.

Non-limiting examples of suitable carbon fibers include graphite fibers, activated carbon fibers, poly(acrylonitrile)-derived carbon fibers, and the like.

In some exemplary embodiments, natural staple fibers may also be used in the nonwoven fibrous structure. Non-limiting examples of suitable natural staple fibers include those of bamboo, cotton, wool, jute, agave, sisal, coconut, soybean, hemp, and the like. The natural fiber component used may be virgin fibers or recycled waste fibers, for example, recycled fibers reclaimed from garment cuttings, carpet manufacturing, fiber manufacturing, textile processing, or the like. Preferably, the natural staple fibers are treated with a flame retardant to improve their fire resistance.

In certain exemplary embodiments, the staple fibers are non-melt-blown staple fibers. Non-limiting examples of suitable non-melt-blown staple fibers include single component synthetic fibers, semi-synthetic fibers, polymeric fibers, metal fibers, carbon fibers, ceramic fibers, and natural fibers. Synthetic and/or semi-synthetic polymeric fibers include those made of polyester (e.g., polyethylene terephthalate), nylon (e.g., hexamethylene adipamide, polycaprolactam), polypropylene, acrylic (formed from a polymer of acrylonitrile), rayon, cellulose acetate, polyvinylidene chloride-vinyl chloride copolymers, vinyl chloride-acrylonitrile copolymers, and the like.

*Optional Electret Fiber Component*

The nonwoven melt-blown fibrous webs of the present disclosure may optionally comprise electret fibers. Suitable electret fibers are described in U.S. Patent Nos. 4,215,682; 5,641,555; 5,643,507; 5,658,640; 5,658,641; 6,420,024; 6,645,618, 6,849,329; and 7,691,168, the entire disclosures of which are incorporated herein by reference.

Suitable electret fibers may be produced by meltblowing fibers in an electric field, e.g. by melting a suitable dielectric material such as a polymer or wax that contains polar molecules, passing the molten material through a melt-blowing die to form discrete fibers, and then allowing the molten polymer to re-solidify while the discrete fibers are exposed to a powerful electrostatic field. Electret fibers may also be made by embedding excess charges into a highly insulating dielectric material such as a polymer or wax, e.g. by means of an electron beam, a corona discharge, injection from an electron, electric breakdown across a gap or a dielectric barrier, and the like. Particularly suitable electret fibers are hydrocharged fibers.

*Optional Particulate Component*

In further exemplary embodiments, the nonwoven fibrous structure further comprises a plurality of particulates. The plurality of particulates may include organic particulates and/or inorganic particulates. In some exemplary embodiments, the plurality of particulates consist essentially of inorganic particulates. In certain such embodiments, the plurality of particulates comprise flame-retardant particulates, intumescent particulates, or a combination thereof.

Generally, the plurality of particulates may be present in an amount of at least 1 wt. %, 2.5 wt. %, 5 wt. %, 10 wt. %, 15 wt. %, 20 wt. % or even 25 wt. %; and no greater than 50 wt. % , 45 wt. %, 40 wt. %, 35 wt, %, or even 30 wt. %, based on the weight of the nonwoven fibrous structure.

Preferably, the nonwoven fibrous structures are free of halogenated flame-retardant additives, including halogenated flame-retardant particulates. Included within the scope of halogenated flame-retardant additivess are halogen-substituted benzenes exemplified by tetrabromobenzene, hexachlorobenzene, hexabromobenzene; biphenyls such as 2,2'-dichlorobiphenyl, 2,4'-dibromobiphenyl, 2,4'-dichlorobiphenyl, hexabromobiphenyl, octabromobiphenyl, decabromobiphenyl; halogenated diphenyl ethers, containing 2 to 10 halogen atoms; chlorine containing aromatic polycarbonates, and mixtures of any of the foregoing.

Optionally, the nonwoven fibrous structures may also include one or more non-halogenated flame-retardant agents, including non-halogenated flame-retardant particulates. Useful flame-retardant particulates comprise non-halogenated organic compounds, organic phosphorus-containing compounds (such as organic phosphates), inorganic compounds and inherently flame-retardant polymers, such as, for example PPS.

These particulate additives may be added to or incorporated into the polymeric matrix of the melt-blown nonwoven fibrous structure in sufficient amounts to render an otherwise flammable polymer flame-retardant as determined by the melt-blown nonwoven fibrous structure passing one or more test selected from UL 94 V0, FAR 25.853 (a), FAR 25.856 (a), AITM20007A, and AITM 3-0005.

The nature of the non-halogenated flame-retardant particulate is not critical and a single type of particulate may be used. Optionally, it may be found desirable to use a mixture of two or more individual non-halogenated flame-retardant particulates.

Among the useful organic phosphorus particulates are those comprising organic phosphorus compounds, phosphorus-nitrogen compounds and halogenated organic phosphorus compounds. Often organic phosphorus compounds function as flame-retardants by forming protective liquid or char barriers, which minimize transpiration of polymer degradation products to the flame and/or act as an insulating barrier to minimize heat transfer.

In general, the preferred phosphate compounds are selected from organic phosphonic acids, phosphonates, phosphinates, phosphonites, phosphinites, phosphine oxides, phosphines, phosphites or phosphates. Illustrative is triphenyl phosphine oxide. These can be used alone or mixed with hexabromobenzene or a chlorinated biphenyl and, optionally, antimony oxide. Phosphorus-containing flame-retardant additives are described, for example, in Kirk-Othmer (supra) pp. 976-98.

Typical examples of suitable phosphates include, phenylbisdodecyl phosphate, phenylbisneopentyl phosphate, phenylethylene hydrogen phosphate, phenyl-bis-3,5,5'-trimethylhexyl phosphate), ethyldiphenyl phosphate, 2-ethylhexyl di(p-tolyl) phosphate, diphenyl hydrogen phosphate, bis(2-ethyl-hexyl) p-tolylphosphate, tritolyl phosphate, bis(2-ethyl-hexyl)-phenyl phosphate, tri(nonylphenyl) phosphate, phenylmethyl hydrogen phosphate, di(dodecyl) p-tolyl phosphate, tricresyl phosphate, triphenyl phosphate, halogenated triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, diphenyl hydrogen phosphate, and the like. Triphenyl phosphate is a particularly useful flame-retardant additive, often in combination with hexabromobenzene and, optionally, antimony oxide.

Also suitable as flame-retardant particulates are those comprising compounds containing phosphorus-nitrogen bonds, such as phosphorus ester amides, phosphoric acid amides, phosphonic acid amides or phosphinic acid amides.

Among the useful inorganic flame-retardant particulates include those comprising compounds of antimony, such as include antimony trioxide, antimony pentoxide, and sodium antimonate; boron, such as barium metaborate, boric acid, sodium borate and zinc borate; aluminum, such as aluminum trihydrate; magnesium, such as magnesium hydroxide; molybdenum, such as molybdic oxide, ammonium molybdate and zinc molybdate, phosphorus, such as phosphoric acid; and tin, such as zinc stannate. The mode of action is often varied and may include inert gas dilution, (by liberating water for example), and thermal quenching (by endothermic degradation of the additive). Useful inorganic additives are described for example in Kirk-Othmer (supra), pp 936-54.

The flame-retardant particulates may also be comprised of one or more inherently flame-retardant (co)polymer. Inherently flame-retardant (co)polymers, due to their chemical structure, either do not support combustion, or are self-extinguishing. These polymers often have increased stability at higher temperatures by incorporating stronger bonds (such as aromatic rings or inorganic bonds) in the backbone of the polymers or are highly halogenated.

Examples of inherently flame-retardant polymers include, for example, poly(phenylene sulfide), poly(vinyl chloride), poly(vinylidine chloride), chlorinated polyethylene, polyimides, polybenzimidazoles, polyether ketones, polyphosphazenes, and polycarbonates. Useful inherently flame-retardant films generally have a Limiting Oxygen Index (LOI) of at least 28% as determined by ASTM D-2863-91.

The particulate size (median diameter) of the flame-retardant particulates should generally be less than the diameters of the melt-blown fibers into which they are incorporated. Preferably the particulate size is less than one-half, more preferably less than one-third, even more preferably less than one-fourth, even more preferably less than one-fifth, and most preferably less than one-tenth the diameter of the melt-blown fibers into which they are incorporated. In general, the smaller the median diameter of the flame-retardant particulate, or the more surface area the particulate presents, the more effective the flame-retardant properties.

The flame-retardant particulates are generally incorporated into the melt-blown fibers by addition of the particulates to the polymer melt prior to melt-blown fiber formation. The particulates may be added neat, or incorporated into a diluent or additional (co)polymer.

When using an inherently flame-retardant polymer as a flame-retardant particulate, it may be melt blended if compatible. Alternatively the inherently flame-retardant polymer may be added as fine particulates dispersed in the polymer melt. Care should be exercised to choose an additive that is stable at the melt temperature of the polymer.

Optionally, the nonwoven fibrous structure may additionally or alternatively include intumescent particulates, which may be incorporated into the melt-blown fibers. Intumescent particulates useful for making nonwoven fibrous structures according to the present disclosure include, but are not limited to, expandable vermiculite, treated expandable vermiculite, partially dehydrated expandable vermiculite, expandable perlite, expandable graphite, expandable hydrated alkali metal silicate (for example, expandable granular sodium silicate, e.g. of the general type described in U.S. Pat. No. 4,273,879, and available e.g., under the trade designation "EXPANTROL", from 3M Company (St. Paul, MN), and mixtures thereof.

An example of one particular commercially-available intumescent particulate is expandable graphite flake, available under the trade designation GRAFGUARD Grade 160-50, from UCAR Carbon Co., Inc. (Cleveland, OH).

In various embodiments, the intumescent particulates may be present at zero, at least about 1 wt. %, at least about 5 wt. %, at least about 10 wt. %, at least about 20 wt. %, or at least about 30 wt. %, based on the total weight of the nonwoven fibrous structure. In further embodiments, the intumescent particulate(s) may be present at most about 40 wt. %, at most about 30 wt. %, or at most about 25 wt. % at most about 20 wt. %, based on the total weight of the nonwoven fibrous structure.

The intumescent particulates may be combined with any suitable inorganic fiber, including e.g. ceramic fibers, biosoluble fibers, glass fibers, mineral wool, basalt fibers and so on.

Optionally, the nonwoven fibrous structure may also include endothermic particulates. Suitable endothermic particulates may include e.g. any inorganic particulate comprising a compound capable of liberating water (*e.g.,* water of hydration) *e.g.,* at temperatures of between 200°C and 400°C. Suitable endothermic particulates may thus include materials such as alumina trihydrate, magnesium hydroxide, and the like.

A particular type of endothermic particulate may be used singly; or, at least two or more endothermic particulates of different types may be used in combination. In various embodiments, the endothermic particulate(s) may be present at zero, at least about 2, at least about 5, at least about 10, at least about 20, or at least about 30% by weight, based on the total weight of the melt-blown nonwoven fibrous structure. The endothermic particulate(s) may be combined with any suitable inorganic fiber, including e.g. ceramic fibers, biosoluble fibers, glass fibers, mineral wool, basalt fibers and so on, and may also be combined with any suitable intumescent particulate(s).

In additional exemplary embodiments, the particulates comprise one or more inorganic insulative particulates. Suitable insulative particulates may include e.g. any inorganic compound that, when present in the nonwoven fibrous structure, can increase the thermal insulating properties of the web, e.g. without unacceptably increasing the weight or density of the nonwoven fibrous structure. Inorganic particulate particulates that comprise relatively high porosity may be particularly suitable for these purposes.

Suitable insulative particulates may include materials such as fumed silica, precipitated silica, diatomaceous earth, Fuller's earth, expanded perlite, silicate clays and other clays, silica gel, glass bubbles, ceramic microspheres, talc and the like.

Those of ordinary skill in the art will appreciate that there may not be a clear dividing line between insulative particulates and e.g. certain endothermic or intumescent particulates). A particular type of insulative particulate may be used singly; or, at least two or more insulative particulates of different types may be used in combination.

In various embodiments, the insulative particulate(s) may be present at zero, at least about 5, at least about 10, at least about 20, at least about 40, or at least about 60% by weight, based on the total weight of the melt-blown nonwoven fibrous structure.

The insulative particulate(s) may be combined with any suitable inorganic fiber, including e.g. ceramic fibers, biosoluble fibers, glass fibers, mineral wool, basalt fibers and so on, and may also be combined with any suitable intumescent particulate(s) and/or endothermic particulate(s).

Exemplary nonwoven fibrous structures according to the present disclosure may also advantageously include a plurality of chemically active particulates. The chemically active particulates can be any discrete particulate, which is a solid at room temperature, and which is capable of undergoing a chemical interaction with an external fluid phase. Exemplary chemical interactions include adsorption, absorption, chemical reaction, catalysis of a chemical reaction, dissolution, and the like.

Additionally, in any of the foregoing exemplary embodiments, the chemically active particulates may advantageously be selected from sorbent particulates (e.g. adsorbent particulates, absorbent particulates, and the like), desiccant particulates (e.g. particulates comprising a hygroscopic substance such as, for example, calcium chloride, calcium sulfate, and the like, that induces or sustains a state of dryness in its local vicinity), biocide particulates, microcapsules, and combinations thereof. In any of the foregoing embodiments, the chemically active particulates may be selected from activated carbon particulates, activated alumina particulates, silica gel particulates anion exchange resin particulates, cation exchange resin particulates, molecular sieve particulates, diatomaceous earth particulates, anti-microbial compound particulates, metal particulates, and combinations thereof.

In one exemplary embodiment of a nonwoven fibrous web particularly useful as a fluid filtration article, the chemically active particulates are sorbent particulates. A variety of sorbent particulates can be employed. Sorbent particulates include mineral particulates, synthetic particulates, natural sorbent particulates or a combination thereof. Desirably the sorbent particulates will be capable of absorbing or adsorbing gases, aerosols, or liquids expected to be present under the intended use conditions.

The sorbent particulates can be in any usable form including beads, flakes, granules or agglomerates. Preferred sorbent particulates include activated carbon; silica gel; activated alumina and other metal oxides; metal particulates (e.g., silver particulates) that can remove a component from a fluid by adsorption or chemical reaction; particulate catalytic agents such as hopcalite (which can catalyze the oxidation of carbon monoxide); clay and other minerals treated with acidic solutions such as acetic acid or alkaline solutions such as aqueous sodium hydroxide; ion exchange resins; molecular sieves and other zeolites; biocides; fungicides and virucides. Activated carbon and activated alumina are presently particularly preferred sorbent particulates. Mixtures of sorbent particulates can also be employed, e.g., to absorb mixtures of gases, although in practice to deal with mixtures of gases it may be better to fabricate a multilayer sheet article employing separate sorbent particulates in the individual layers.

In one exemplary embodiment of a nonwoven fibrous web particularly useful as a gas filtration article, the chemically active sorbent particulates are selected to be gas adsorbent or absorbent particulates. For example, gas adsorbent particulates may include activated carbon, charcoal, zeolites, molecular sieves, an acid gas adsorbent, an arsenic reduction material, an iodinated resin, and the like. For example, absorbent particulates may also include naturally porous particulate materials such as diatomaceous earth, clays, or synthetic particulate foams such as melamine, rubber, urethane, polyester, polyethylene, silicones, and cellulose. The absorbent particulates may also include superabsorbent particulates such as sodium polyacrylates, carboxymethyl cellulose, or granular polyvinyl alcohol.

In certain exemplary embodiments of a nonwoven fibrous web particularly useful as a liquid filtration article, the sorbent particulates comprise liquid an activated carbon, diatomaceous earth, an ion exchange resin (e.g. an anion exchange resin, a cation exchange resin, or combinations thereof), a molecular sieve, a metal ion exchange sorbent, an activated alumina, an antimicrobial compound, or combinations thereof. Certain exemplary embodiments provide that the web has a sorbent particulate density in the range of about 0.20 to about 0.5 g/cc.

Various sizes and amounts of sorbent chemically active particulates may be used to create a nonwoven fibrous web. In one exemplary embodiment, the sorbent particulates have a median size greater than 1 mm in diameter. In another exemplary embodiment, the sorbent particulates have a median size less than 1 cm in diameter. In further embodiments, a combination of particulate sizes can be used. In one exemplary additional embodiment, the sorbent particulates include a mixture of large particulates and small particulates.

The desired sorbent particulate size can vary a great deal and usually will be chosen based in part on the intended service conditions. As a general guide, sorbent particulates particularly useful for fluid filtration applications may vary in size from about 0.001 to about 3000 $\mu$m median diameter. Generally, the sorbent particulates are from about 0.01 to about 1500 $\mu$m median diameter, more generally from about 0.02 to about 750 $\mu$m median diameter, and most generally from about 0.05 to about 300 $\mu$m median diameter.

In certain exemplary embodiments, the sorbent particulates may comprise nano-particulates having a population median diameter less than 1 $\mu$m. Porous nano-particulates may have the advantage of providing high surface area for sorption of contaminants from a fluid medium (e.g., absorption and/or adsorption). In such exemplary embodiments using ultrafine or nano-particulates, it may be preferred that the particulates are adhesively bonded to the fibers using an adhesive, for example a hot melt adhesive, and/or the application of heat to the melt-blown nonwoven fibrous web (i.e., thermal bonding).

Mixtures (e.g., bimodal mixtures) of sorbent particulates having different size ranges can also be employed, although in practice it may be better to fabricate a multilayer sheet article employing larger sorbent particulates in an upstream layer and smaller sorbent particulates in a downstream layer. At least 80 weight percent sorbent particulates, more generally at least 84 weight percent and most generally at least 90 weight percent sorbent particulates are enmeshed in the web. Expressed in terms of the web basis weight, the sorbent particulate loading level may for example be at least about 500 gsm for relatively fine (e.g. sub-micrometer-sized) sorbent particulates, and at least about 2,000 gsm for relatively coarse (e.g., micro-sized) sorbent particulates.

In some exemplary embodiments, the chemically active particulates are metal particulates. The metal particulates may be used to create a polishing nonwoven fibrous web. The metal particulates may be in the form of short fiber or ribbon-like sections or may be in the form of grain-like particulates. The metal particulates can include any type of metal such as but not limited to silver (which has antibacterial/antimicrobial properties), copper (which has properties of an algaecide), or blends of one or more of chemically active metals.

In other exemplary embodiments, the chemically active particulates are solid biocides or antimicrobial agents. Examples of solid biocide and antimicrobial agents include halogen containing compounds such as sodium dichloroisocyanurate dihydrate, benzalkonium chloride, halogenated dialkylhydantoins, and triclosan.

In further exemplary embodiments, the chemically active particulates are microcapsules. Some suitable microcapsules are described in U.S. Pat. No. 3,516,941 (Matson), and include examples of the microcapsules that can be used as the chemically active particulates. The microcapsules may be loaded with solid or liquid biocides or antimicrobial agents. One of the main qualities of a microcapsule is that by means of mechanical stress the particulates can be broken in order to release the material contained within them. Therefore, during use of the nonwoven fibrous web, the microcapsules will be broken due to the pressure exerted on the nonwoven fibrous web, which will release the material contained within the microcapsule.

In certain such exemplary embodiments, it may be advantageous to use at least one particulate that has a surface that can be made adhesive or "sticky" so as to bond together the particulates to form a mesh or support nonwoven fibrous web for the fiber component. In this regard, useful particulates may comprise a polymer, for example, a thermoplastic polymer, which may be in the form of discontinuous fibers. Suitable polymers include polyolefins, particularly thermoplastic elastomers (TPE's) (e.g., VISTAMAXX™, available from Exxon-Mobil Chemical Company, Houston, Texas). In further exemplary embodiments, particulates comprising a TPE, particularly as a surface layer or surface coating, may be preferred, as TPE's are generally somewhat tacky, which may assist bonding together of the particulates to form a three-dimensional network before addition of the fibers to form the nonwoven fibrous web. In certain exemplary embodiments, particulates comprising a VISTAMAXX™ TPE may offer improved resistance to harsh chemical environments, particularly at low pH (e.g., pH no greater than about 3) and high pH (e.g., pH of at least about 9) and in organic solvents.

Any suitable size or shape of particulate material may be selected. Suitable particulates may have a variety of physical forms (e.g., solid particulates, porous particulates, hollow bubbles, agglomerates, discontinuous fibers, staple fibers, flakes, and the like); shapes (e.g., spherical, elliptical, polygonal, needle-like, and the like); shape uniformities (e.g., monodisperse, substantially uniform, non-uniform or irregular, and the like); composition (e.g. inorganic particulates, organic particulates, or combination thereof); and size (e.g., sub-micrometer-sized, micro-sized, and the like).

With particular reference to particulate size, in some exemplary embodiments, it may be desirable to control the size of a population of the particulates. In certain exemplary embodiments, particulates are physically entrained or trapped in the fiber nonwoven fibrous web. In such embodiments, the population of particulates is generally selected to have a median diameter of at least 50 $\mu$m, more generally at least 75 $\mu$m, still more generally at least 100 $\mu$m.

In other exemplary embodiments, it may be preferred to use finer particulates that are adhesively bonded to the fibers using an adhesive, for example a hot melt adhesive, and/or the application of heat to one or both of thermoplastic particulates or thermoplastic fibers (i.e., thermal bonding). In such embodiments, it is generally preferred that the particulates have a median diameter of at least 25 $\mu$m, more generally at least 30 $\mu$m, most generally at least 40 $\mu$m. In some exemplary embodiments, the chemically active particulates have a median size less than 1 cm in diameter. In other embodiments, the chemically active particulates have a median size of less than 1 mm, more generally less than 25 micrometers, even more generally less than 10 micrometers.

However, in other exemplary embodiments in which both an adhesive and thermal bonding are used to adhere the particulates to the fibers, the particulates may comprise a population of sub-micrometer-sized particulates having a population median diameter of less than one micrometer ($\mu$m), more generally less than about 0.9 $\mu$m, even more generally less than about 0.5 $\mu$m, most generally less than about 0.25 $\mu$m. Such sub-micrometer-sized particulates may be particularly useful in applications where high surface area and/or high absorbency and/or adsorbent capacity is desired. In further exemplary embodiments, the population of sub-micrometer-sized particulates has a population median diameter of at least 0.001 $\mu$m, more generally at least about 0.01 $\mu$m, most generally at least about 0.1 $\mu$m, most generally at least about 0.2 $\mu$m.

In further exemplary embodiments, the particulates comprise a population of micro-sized particulates having a population median diameter of at most about 2,000 $\mu$m, more generally at most about 1,000 $\mu$m, most generally at most about 500 $\mu$m. In other exemplary embodiments, the particulates comprise a population of micro-sized particulates having a population median diameter of at most about 10 $\mu$m, more generally at most about 5 $\mu$m, even more generally at most about 2 $\mu$m (e.g., ultrafine micro-fibers).

Multiple types of particulates may also be used within a single finished web. Using multiple types of particulates, it may be possible to generate continuous particulate webs even if one of the particulate types does not bond with other particulates of the same type. An example of this type of system would be one where two types are particulates are used, one that bonds the particulates together (e.g., a discontinuous polymeric fiber particulate) and another that acts as an active particulate for the desired purpose of the web (e.g., a sorbent particulate such as activated carbon). Such exemplary embodiments may be particularly useful for fluid filtration applications.

Depending, for example, on the density of the chemically active particulate, size of the chemically active particulate, and/or desired attributes of the final nonwoven fibrous web article, a variety of different loadings of the chemically active particulates may be used relative to the total weight of the fibrous web. In one embodiment, the chemically active particulates comprise less than 90% wt. of the total nonwoven article weight. In one embodiment, the chemically active particulates comprise at least 10% wt. of the total nonwoven article weight.

In any of the foregoing embodiments, the chemically active particulates may be advantageously distributed throughout the entire thickness of the nonwoven fibrous web. However, in some of the foregoing embodiments, the chemically active particulates are preferentially distributed substantially on a major surface of the nonwoven fibrous web.

Furthermore, it is to be understood that any combination of one or more of the above described chemically active particulates may be used to form nonwoven fibrous webs according to the present disclosure.

**Nonwoven Fibrous Articles**

Nonwoven melt-blown fibrous structures can be made using the foregoing materials and the following melt-blowing apparatus and processes. In some exemplary embodiments, the nonwoven melt-blown fibrous structure takes the form of a mat, web, sheet, a scrim, or a combination thereof.

In some particular exemplary embodiments, the melt-blown nonwoven fibrous structure or web may advantageously include charged melt-blown fibers, e.g., electret fibers. In certain exemplary embodiments, the melt-blown nonwoven fibrous structure or web is porous. In some additional exemplary embodiments, the melt-blown nonwoven fibrous structure or web may advantageously be self-supporting. In further exemplary embodiments, the melt-blown nonwoven fibrous structure or web advantageously may be pleated, e.g., to form a filtration medium, such as a liquid (e.g., water) or gas (e.g., air) filter, a heating, ventilation or air conditioning (HVAC) filter, or a respirator for personal protection. For example, U.S. Patent No. 6,740,137 discloses nonwoven webs used in a collapsible pleated filter element.

Webs of the present disclosure may be used by themselves, e.g., for filtration media, decorative fabric, or a protective or cover stock. Or they may be used in combination with other webs or structures, e.g., as a support for other fibrous layers deposited or laminated onto the web, as in a multilayer filtration media, or a substrate onto which a membrane may be cast. They may be processed after preparation as by passing them through smooth calendering rolls to form a smooth-surfaced web, or through shaping apparatus to form them into three-dimensional shapes.

A fibrous structure of the present disclosure can further comprise at least one or a plurality of other types of fibers (not shown) such as, for example, staple or otherwise discontinuous fibers, melt spun continuous fibers or a combination thereof. The present exemplary fibrous structures can be formed, for example, into a non-woven web that can be wound about a tube or other core to form a roll, and either stored for subsequent processing or transferred directly to a further processing step. The web may also be cut into individual sheets or mats directly after the web is manufactured or sometime thereafter.

The melt-blown nonwoven fibrous structure or web can be used to make any suitable article such as, for example, a thermal insulation article, an acoustic insulation article, a fluid filtration article, a wipe, a surgical drape, a wound dressing, a garment, a respirator, or a combination thereof. The thermal or acoustic insulation articles may be used as an insulation component for vehicles (e.g., trains, airplanes, automobiles and boats). Other articles such as, for example, bedding, shelters, tents, insulation, insulating articles, liquid and gas filters, wipes, garments, garment components, personal protective equipment, respirators, and the like, can also be made using melt-blown nonwoven fibrous structures of the present disclosure.

The thickness of the nonwoven fibrous structure may advantageously be selected to be at least 0.5 cm, 1 cm, 1.5 cm, 2 cm, 2.5 cm, or 3 cm; and at most 10.5 cm, 10 cm, 9.5 cm, 9 cm, 8.5 cm, 8 cm, or even 7.5 cm.

Flexible, drape-able and compact nonwoven fibrous webs may be preferred for certain applications, for examples as furnace filters or gas filtration respirators. Such nonwoven fibrous webs typically have a density greater than 75 $kg/m^3$ and typically greater than 100 $kg/m^3$ or even 120 100 $kg/m^3$. However, open, lofty nonwoven fibrous webs suitable for use in certain fluid filtration applications generally have a maximum density of 60 $kg/m^3$. Certain nonwoven fibrous webs according to the present disclosure may advantageously have Solidity less than 20%, more generally less than 15%, even more preferable less than 10%.

Among other advantages, the melt-blown fibers and melt-blown nonwoven fibrous structures (e.g., webs) are fire-resistant and dimensionally stable even when heated or used at elevated temperatures. Thus, in exemplary embodiments, the disclosure provides a fire-resistant and dimensionally stable non-woven fibrous structure prepared using any of the foregoing apparatuses and processes.

In some particular exemplary embodiments, this non-woven fiber generation and in-flight heat treatment process provides fibers and nonwoven fibrous webs containing fibers with a reduced tendency to shrink and degrade under higher temperature applications, such as, for example, providing acoustic insulation in an automobile, train, aircraft, boat, or other vehicle.

Additionally, exemplary nonwoven fibrous webs of the present disclosure may exhibit a Compressive Strength, as measured using the test method disclosed herein, greater than 1 kiloPa (kPa), greater than 1.2 kPa, greater than 1.3 kPa, greater than 1.4 kPa, or even greater than 1.5 kPa. Furthermore, exemplary nonwoven fibrous webs of the present disclosure may exhibit a Maximum Load Tensile Strength, as measured using the test method disclosed herein, of greater than 10 Newtons (N), greater than 50 N, greater than 100 N, greater than 200 N, or even greater than 300 N.

### Melt-blowing Apparatus

In further exemplary embodiments, the present disclosure provides an apparatus including a melt-blowing die, a means for controlled in-flight heat treatment of melt-blown fibers emitted from the melt-blowing die at temperature below a melting temperature of the melt-blown fibers, and a collector for collecting the in-flight heat treated melt-blown fibers.

Referring now to Figure 1A, a schematic overall side view of an illustrative apparatus 15 for carrying out embodiments of the present disclosure is shown as a direct-web production method and apparatus, in which a fiber-forming (co)polymeric material is converted into a web in one essentially direct operation. The apparatus 15 consists of a conventional blown micro-fiber (BMF) production configuration as taught, for example, in van Wente, "Superfine Thermoplastic Fibers", Industrial Engineering Chemistry, Vol. 48, pages 1342 et sec (1956), or in Report No. 4364 of the Naval Research Laboratories, published May 25, 1954 entitled "Manufacture of Superfine Organic Fibers" by van Wente, A., Boone, C. D., and Fluharty, E. L. The configuration consists of an extruder 10 having a hopper 11 for pellets or powdered (co)polymer resin and a series of heating jackets 12 which heat the extruder barrel to melt the (co)polymer resin to form a molten (co)polymer. The molten (co)polymer exits from the extruder barrel into a pump 14, which permits improved control over the flow of the molten (co)polymer through the downstream components of the apparatus.

Optionally, upon exiting from the pump 14, the molten (co)polymer flows into an optional mixing means 15 including a conveying tube 16 which contains, for example, a mixing means such as a KENIX type static mixer 18. A series of heating jackets 20 control the temperature of the molten (co)polymer as it passes through the conveying tube 16. The mixing means 15 also optionally includes an injection port 22 near the inlet end of the conveying tube that is connected to an optional high pressure metering pump 24 which enables optional additives to be injected into the molten (co)polymer stream as it enters the static mixer 18.

After exiting from the optional conveying tube 16, the molten (co)polymer stream is delivered through a melt-blowing (BMF) die 26 comprising at least one orifice through which a stream of the molten (co)polymer is passed while simultaneously impinging on the (co)polymer stream a high velocity hot air stream which acts to draw out and attenuate the molten (co)polymer stream into micro-fibers.

Referring now to Figure 1B, a schematic overall side view of another illustrative apparatus for carrying out embodiments of the present disclosure is shown as a direct-web production method and apparatus 15', in which a fiber-forming molten (co)polymeric material is converted into a web in one essentially direct operation. The apparatus 15' consists of a conventional blown micro-fiber (BMF) production configuration as taught, for example, in van Wente, described above. The configuration consists of an extruder 10 having a hopper 11 for pellets or powdered (co)polymer resin, which heats the (co)polymer resin to form a molten stream of (co)polymer resin. The molten stream of (co)polymer resin passes into a melt-blowing (BMF) die 26 comprising at least one orifice 11 through which a stream 33 of the molten (co)polymer is passed while simultaneously impinging on the exiting (co)polymer stream 33, high velocity hot air streams formed by passing gas from a gas supply manifold 25, through gas inlets 15, exiting the die 26 at gas jets 23 and 23', which act to draw out and attenuate the molten (co)polymer stream into micro-fibers. The velocity of the gas jets may be controlled, for example, by adjusting the pressure and/or flow rate of the gas stream, and/or by controlling the gas inlet dimension 27 (i.e., gap).

In either of the apparatus or processes shown in Figs. 1a or 1b, immediately upon exiting the at least one orifice 11 of the melt-blowing die 15 or 15', the molten (co)polymer fiber stream is subjected to a controlled in-flight heat treatment at a temperature below a melting temperature of the poly(phenylene sulfide) making up the fibers, using a means 32 and/or 32', for controlled in-flight heat treatment. In some exemplary embodiments, the means 32 and/or 32' for controlled in-flight heat treatment of melt-blown fibers emitted from the melt-blowing die is selected from a radiative heater, a natural convection heater, a forced gas flow convection heater, and combinations thereof.

In some exemplary embodiments, the means for controlled in-flight heat treatment of melt-blown fibers emitted from the melt-blowing die is one or more forced gas flow convection heaters 32 and/or 32', positioned to directly or indirectly (e.g., using entrained ambient air) impinge on the melt-blown fiber stream immediately upon exiting the melt-blowing die 26, as illustrated in Figure 1b. In certain exemplary embodiments, the means for controlled in-flight heat treatment of melt-blown fiber stream immediately upon exiting the melt-blowing die 26 is one or more radiative heaters 32 and/or 32' as shown in Figure 1a (e.g., at least one infrared heater, for example a quartz lamp infrared heater as described in the Examples).

By "immediately upon exiting from the melt-blowing die," we mean that the controlled in-flight heat treatment of the melt-blown fibers occurs within a heat treatment distance 21 from the extending from the at least one orifice 11 through which the stream 33 of the molten (co)polymer is passed. The heat treatment distance 21 may be as short as 0 mm, 0.1 mm, 0.2 mm, 0.3 mm, 0.5 mm, 0.6 mm, 0.7 mm, 0.8 mm, 0.9 mm, or even 1mm. Preferably, the heat treatment distance is no more than 50 mm, 40 mm, 30 mm, 20 mm, 10 mm, or even 5 mm. Preferably, the total distance of heat treatment is from 0.1 to 50 mm, 0.2 to 49 mm, 0.3 to 48 mm, 0.4 to 47 mm, 0.4 to 46 mm, 0.5 to 45 mm, 0.6 to 44 mm, 0.7 to 43 mm, 0.8 to 42 mm, 0.9 to 41 mm, or even 1 mm or greater to 40 mm or less.

During and after in-flight heat treatment, the micro-fibers begin to solidify, and thus form a cohesive web 30 as they arrive at a collector 28. This method is particularly preferred in that it produces fine diameter fibers that can be directly formed into a melt-blown nonwoven fibrous web without the need for subsequent bonding processes.

## Melt-blowing Process

In further exemplary embodiments, the disclosure provides a process comprising:

a) forming a plurality of melt-blown fibers by passing a molten stream comprising polyphenylene sulfide through a plurality of orifices of a melt-blowing die;

b) subjecting at least a portion of the melt-blown fibers of step (a) to a controlled in-flight heat treatment operation immediately upon exit of the melt-blown fibers from the plurality of orifices, wherein the controlled in-flight heat treatment operation takes place at a temperature below a melting temperature of the portion of the melt-blown fibers for a time sufficient to achieve stress relaxation of at least a portion of the molecules within the portion of the fibers subjected to the controlled in-flight heat treatment operation; and

c) collecting at least some of the portion of the melt-blown fibers subjected to the controlled in-flight heat treatment operation of step (b) on a collector to form a non-woven fibrous structure, wherein the nonwoven fibrous structure exhibits a Shrinkage less than a Shrinkage measured on an identically-prepared structure that is not subjected to the controlled in-flight heat treatment operation of step (b), and further wherein the nonwoven fibrous structure exhibits fire-resistance by passing one or more test selected from UL 94 V0, FAR 25.853 (a), FAR 25.856 (a), AITM20007A, and AITM 3-0005, without any added flame-retardant additive. In some exemplary embodiments, the plurality of melt-blown fibers do not contain a nucleating agent in an amount effective to achieve nucleation.

In the melt-blowing process, the poly(phenylene sulfide) and any optional thermoplastic (co)polymer is melted to form a molten (co)polymer material, which is then extruded through one or more orifices of a melt-blowing die. In some exemplary embodiments, the melt-blowing process can include forming (e.g., extruding) the molten (co)polymer material into at least one or a plurality of fiber preforms which is then passed through at least one orifice of a melt-blowing die and solidified (e.g., by cooling) the at least one fiber preform into the at least one fiber. The molten (co)polymer material is generally still molten when the preform is made and passed through at least one orifice of the melt-blowing die.

In any of the foregoing processes, the melt-blowing should be performed within a range of temperatures hot enough to enable the thermoplastic (co)polymer material to be melt-blown but not so hot as to cause unacceptable deterioration of the thermoplastic (co)polymer material. For example, the melt-blowing can be performed at a temperature that causes the poly(phenylene sulfide) and any optional thermoplastic (co)polymer material to reach a temperature in the range of from at least about 200°C, 225°C, 250°C, 260°C, 270°C, 280°C, or even at least 290°C; to less than or equal to about 360°C, 350°C, 340°C, 330°C, 320°C, 310°C, or even 300°C.

*Controlled In-flight Heat Treatment Process*

The controlled in-flight heat treatment operation may be carried out using radiative heating, natural convection heating, forced gas flow convection heating, or a combination thereof. Suitable radiative heating may be provided, for example, using infrared or halogen lamp heating systems. Suitable infrared (e.g., quartz lamp) radiative heating systems may be obtained from Research, Inc. of Eden Prairie, MN; Infrared Heating Technologies, LLC, Oak Ridge, TN; and Roberts-Gordon, LLC, Buffalo, NY. Suitable forced gas flow convection heating systems may be obtained from Roberts-Gordon, LLC, Buffalo, NY; Applied Thermal Systems, Inc., Chattanooga, TN; and from Chromalox Precision Heat and Control, Pittsburgh, PA.

Generally the in-flight heat treatment is carried out at a temperature of from at least about 50°C, 70°C, 80°C, 90°C, 100°C; to at most about 340°C, 330°C, 320°C, 310°C, 300°C, 275°C, 250°C, 225°C, 200°C, 175°C, 150°C, 125°C, or even 110°C.

Generally, the controlled in-flight heat treatment operation has a duration of at least about 0.001 second, 0.005 second, 0.01 second, 0.05 second, 0.1 second, 0.5 second or even 0.75 second; to no more than about 1.5 seconds, 1.4 seconds, 1.3 seconds, 1.2 seconds, 1.1 seconds, 1.0 second, 0.9 second, or even 0.8 second.

As noted above, the preferred temperature at which in-flight heat treatment is carried out will depend, at least in part, on the thermal properties of the poly(phenylene sulfide and any optional thermoplastic (co)polymer(s) which make up the fibers.

In some exemplary embodiments, the (co)polymer(s) optionally include at least one semi-crystalline (co)polymer selected from an aliphatic polyester (co)polymer, an aromatic polyester (co)polymer, or a combination thereof. In certain exemplary embodiments, the semi-crystalline (co)polymer comprises poly(ethylene) terephthalate, poly(butylene) terephthalate, poly(ethylene) naphthalate, poly(lactic acid), poly(hydroxyl) butyrate, poly(trimethylene) terephthalate, or a combination thereof. In certain exemplary embodiments, the at least one thermoplastic semi-crystalline (co)polymer comprises a blend of a polyester (co)polymer and at least one other (co)polymer to form a polymer blend.

In any of the foregoing embodiments, the controlled in-flight heat treatment operation generally subjects the melt-blown fibers to a temperature that is above a glass transition temperature of the poly(phenylene sulfide)(s). In some exemplary embodiments, the controlled in-flight heat treatment operation prevents the (co)polymers comprising the fibers from cooling below their respective glass transition temperatures for a time sufficient for at least some degree of stress relaxation of the (co)polymer molecules to occur.

Without wishing to be bound by any particular theory, it is currently believed that when the in-flight heat treatment process is used to treat semi-crystalline (co)polymeric fibers emitted from a melt-blowing die immediately upon exiting the die orifice(s), the (co)polymer molecules within the melt-blown fibers undergo stress relaxation immediately upon exiting the die orifices, while still in a molten or semi-molten state. The melt-blown fibers are thereby morphologically refined to yield fibers with new properties and utility compared to identical melt-blown fibers without the in-flight heat treatment.

In broadest terms "stress relaxation" as used herein means simply changing the morphology of oriented semi-crystalline (co)polymeric fibers; but we understand the molecular structure of one or more of the (co)polymer(s) in the in-flight heat treated fibers of the present disclosure as follows (we do not wish to be bound by statements herein of our "understanding," which generally involve some theoretical considerations).

The orientation of the (co)polymer chains in the fibers and the degree of stress relaxation of the semi-crystalline thermoplastic (co)polymer molecules within the fibers achieved by in-flight heat treating as described in the present disclosure can be influenced by selection of operating parameters, such as the nature of the (co)polymeric material used, the temperature of the air stream introduced by the air knives which act to fibrillate the polymer streams exiting the orifices, the temperature and duration of in-flight heat treating of the melt-blown fibers, the fiber stream velocity, and/or the degree of solidification of the fibers at the point of first contact with the collector surface,

We currently believe that the stress relaxation achieved by in-flight heat treatment according to the present disclosure may act to reduce the number and/or increase the size of nucleii or "seeds" which act to induce crystallization of the (co)polymeric materials making up the nonwoven fibers. Classical nucleation theories, such as the theory of F. L. Binsbergen ("Natural and Artificial Heterogeneous Nucleation in Polymer Crystallization, Journal of Polymer Science: Polymer Symposia, Volume 59, Issue 1, pages 11-29 (1977)), teach that various fiber formation process parameters, for example, temperature history/heat treatment, quench cooling, mechanical action, or ultrasonic, acoustic or ionizing radiation treatments, generally result in a semi-crystalline material, such as PET, forming fibers in which crystalline nucleation is enhanced in the region between the glass transition and the onset of cold crystallization. Such conventionally prepared fibrous materials "show abundant nucleation" when heated to even 10°C above the glass transition of the (co)polymer material comprising the fibers.

In contrast, web materials prepared using the in-flight heat treatment process of the present disclosure typically show a delay or reduction in the onset of cold crystallization when heated above the glass transition temperature. This delay or reduction in the onset of cold crystallization when the in-flight heat treated fibers are heated above their glass transition temperature also is frequently observed to reduce heat-induced shrinkage of nonwoven fibrous webs comprising such in-flight heat treated fibers.

Thus, in some exemplary embodiments of this in-flight heat treatment process, the fibers, immediately after exiting from a melt-blown die orifice, are maintained at a rather high temperature for a short (but controlled) time period while remaining in-flight. Generally, the fibers are subjected in-flight to a temperature higher than the glass transition temperature of the (co)polymeric material which makes up the fibers, and in some embodiments, as high or higher than the Nominal Melting Point of the (co)polymeric material from which the fibers are made, and for a time sufficient to achieve at least some degree of stress relaxation of the (co)polymer molecules which comprise the fibers.

Further, in certain exemplary embodiments, the in-flight heat treatment process is believed to influence the crystallization behavior and average crystallite size for slow-crystallizing materials such as PET and PLA, thereby altering the shrinkage behavior of nonwoven fibrous webs comprising these materials when heated above their glass transition temperatures. Such *in-situ* refining and reduction of the polymer nucleation site density within the (co)polymeric material which makes up the in-flight heat treated fibers, is believed to reduce the polymer nucleation population by removing the smaller size crystalline "seeds" in the (co)polymer via physical (heat) or chemical changes (e.g., cross-linking) in the (co)polymer chains, thereby resulting in a more thermally stable web exhibiting reduced heat shrinkage.

This improved, low shrinkage behavior is believed to be due, at least in part, to the delaying of crystallization during subsequent heat exposure or processing, possibly due to stronger (co)polymer chain-chain alignment generated by the reduction in the level of crystalline nuclei or "seed" structures present in the (co)polymer, which disrupt molecular order. This *in-situ* reduction in the number or increase in the size of crystal nuclei or "seeds" is believed to result in a nonwoven fibrous web which has a relatively low level of crystallinity as made, yet is more dimensionally stable at higher temperatures, particularly when heated to a temperature at or above the glass transition temperature ($T_g$), and more particularly at or above the cold-crystallization temperature ($T_{cc}$), for the (co)polymeric material which makes up the fibers.

*Optional Process Steps*

The chaotic stream of molten (co)polymer emitted from one or more orifices of a melt-blowing die produced by the foregoing processes can easily incorporate discrete non-melt-blown fibers or particulates that are introduced into the fibrous stream during or after in-flight heat treatment of the melt-blown fibers.

Thus, in some exemplary embodiments, the process further comprises adding a plurality of particulates to the melt-blown fibers before, during or after the in-flight heat treatment operation. In further exemplary embodiments, the process additionally or alternatively comprises adding a plurality of non-melt-blown fibers to the melt-blown fibers during or after the in-flight heat treatment operation.

In particular, the optional particulates and/or non-melt-blown fibers may be advantageously added during in-flight heat treatment, or during collection as a melt-blown nonwoven fibrous web, e.g. as disclosed in U.S. Patent No. 4,100,324. These added non-melt-blown fibers or particulates can become entangled in the fibrous matrix without the need for additional binders or bonding processes. These added non-melt-blown fibers or particulates can be incorporated to add additional characteristics to the melt-blown nonwoven fibrous web, for example, loft, abrasiveness, softness, anti-static properties, fluid adsorption properties, fluid absorption properties, and the like.

Various processes conventionally used as adjuncts to fiber-forming processes may be used in connection with fibers as they exit from one or more orifices of the belt blowing die. Such processes include spraying of finishes, adhesives or other materials onto the fibers, application of an electrostatic charge to the fibers, application of water mists to the fibers, and the like. In addition, various materials may be added to a collected web, including bonding agents, adhesives, finishes, and other webs or films. For example, prior to collection, extruded fibers or fibers may be subjected to a number of additional processing steps not illustrated in Figure 1, e.g., further drawing, spraying, and the like.

In some particular embodiments, the melt-blown fibers may be advantageously electrostatically charged. Thus, in certain exemplary embodiments, the melt-blown fibers may be subjected to an electret charging process. An exemplary electret charging process is hydro-charging. Hydro-charging of fibers may be carried out using a variety of techniques including impinging, soaking or condensing a polar fluid onto the fiber, followed by drying, so that the fiber becomes charged. Representative patents describing hydro-charging include U.S. Patent Nos. 5,496,507; 5,908,598; 6,375,886 B1; 6,406,657 B1; 6,454,986 and 6,743,464 B1. Preferably water is employed as the polar hydro-charging liquid, and the media preferably is exposed to the polar hydro-charging liquid using jets of the liquid or a stream of liquid droplets provided by any suitable spray means.

Devices useful for hydraulically entangling fibers are generally useful for carrying out hydro-charging, although the operation is carried out at lower pressures in hydro-charging than generally used in hydro-entangling. U.S. Patent No. 5,496,507 describes an exemplary apparatus in which jets of water or a stream of water droplets are impinged upon the fibers in web form at a pressure sufficient to provide the subsequently-dried media with a filtration-enhancing electret charge.

The pressure necessary to achieve optimum results may vary depending on the type of sprayer used, the type of polymer from which the fiber is formed, the thickness and density of the web, and whether pretreatment such as corona charging was carried out before hydro-charging. Generally, pressures in the range of about 69 kPa to about 3450 kPa are suitable. Preferably, the water used to provide the water droplets is relatively pure. Distilled or deionized water is preferable to tap water.

The electret fibers may be subjected to other charging techniques in addition to or alternatively to hydro-charging, including electrostatic charging (e.g., as described in U.S. Patent Nos. 4,215,682, 5,401,446 and 6,119,691), tribo-charging (e.g., as described in U.S. Patent No. 4,798,850) or plasma fluorination (e.g., as described in U.S. Patent No. 6,397,458 B1). Corona charging followed by hydro-charging and plasma fluorination followed by hydro-charging are particularly suitable charging techniques used in combination.

After collection, the collected mass 30 may additionally or alternatively be wound into a storage roll for later processing if desired. Generally, once the collected melt-blown nonwoven fibrous web 30 has been collected, it may be conveyed to other apparatus such as calenders, embossing stations, laminators, cutters and the like; or it may be passed through drive rolls and wound into a storage roll.

Other fluids that may be used include water sprayed onto the fibers, e.g., heated water or steam to heat the fibers, and relatively cold water to quench the fibers.

Some of the various embodiments of the present disclosure are further illustrated in the following illustrative Examples. Several examples are identified as Comparative Examples, because they do not show certain properties (such as dimensional stability e.g., low Shrinkage, increased Compression Strength, increased Tensile Strength, fire resistance, etc.); however, the Comparative Examples may be useful for other purposes, and establish novel and nonobvious characteristics of the Examples.

## EXAMPLES

The following Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

Unless otherwise noted, all parts, percentages, ratios, and the like in the Examples and the rest of the specification are provided on the basis of weight. Solvents and other reagents used may be obtained from Sigma-Aldrich Chemical Company (Milwaukee, WI) unless otherwise noted.

### Test Methods:

The following test methods are used to characterize the nonwoven melt-blown fibrous webs of the Examples.

### Median Fiber Diameter

The median Fiber Diameter of the melt-blown fibers in the nonwoven fibrous webs of the Examples was measured using electron microscopy (EM).

### Solidity

Solidity is determined by dividing the measured bulk density of the nonwoven fibrous web by the density of the materials making up the solid portion of the web. Bulk density of a web can be determined by first measuring the weight (e.g. of a 1 0-cm-by-10-cm section) of a web. Dividing the measured weight of the web by the web area provides the basis weight of the web, which is reported in $g/m^2$. The thickness of the web can be measured by obtaining (e.g., by die cutting) a 135 mm diameter disk of the web and measuring the web thickness with a 230 g weight of 100 mm diameter centered atop the web. The bulk density of the web is determined by dividing the basis weight of the web by the thickness of the web and is reported as $g/m^3$.

The solidity is then determined by dividing the bulk density of the nonwoven fibrous web by the density of the material (e.g. (co)polymer) comprising the solid fibers of the web. The density of a bulk (co)polymer can be measured by standard means if the supplier does not specify the material density. Solidity is a dimensionless fraction which is usually reported in percentage.

Loft

Loft is reported as 100% minus the solidity (e.g., a solidity of 7% equates to a loft of 93%).

Shrinkage Measurements

The shrinkage properties of the melt-blown webs were calculated for each web sample using three 10 cm by 10 cm specimens in both the machine (MD) and cross direction (CD). The dimensions of each specimen was measured before and after their placement in a Fisher Scientific Isotemp Oven at 80 °C for 60 minutes, 150 °C for 60 minutes, and 150°C for 7 days. Shrinkage for each specimen was calculated in the MD and CD by the following equation:

$$Shrinkage = \left( \frac{L_o - L}{L_o} \right) \times 100\%$$

where $L_0$ is the initial specimen length and L is the final specimen length. Average values of shrinkage were calculated and reported in the Tables below.

Compressive Strength

The Compressive Strength of the webs was measured according to the following procedure. Circular test samples of 120 mm diameter were cut from the webs. The samples were tested using a conventional INSTRON tensile testing machine using 150 mm diameter compression plates and a crosshead speed of 25 mm/min. The anvil start height was set slightly higher than the sample thickness. The test cycle sequence was as follows. The thickness of the sample was measured at 0.002 psi (13.79 Pa). Compression continued until the sample was at 50% compression based on the initial thickness.
The Compressive Strength at 50% compression was recorded in pounds per square inch and converted to kilopascals (kPa). The compression plates were then returned to the initial anvil starting height. Compression was then paused for 30 seconds and this cycle was then repeated 9 times for a total of 10 cycles for each sample.
Three replicates of each sample web were tested. The three replicates were averaged and the Compressive Strength (kPa) was calculated using the average of all 10 cycles.

Maximum Load Tensile Strength

The tensile strength at maximum load of the webs was measured according to ASTM D 5034-2008 using a crosshead speed of 300 mm/min and a 150 mm grab distance. The maximum load in Newtons (N) was recorded for each test sample. Five replicates of each sample web were tested and the results were averaged to obtain the Maximum Load Tensile Strength.

Example 1 - Formation of 100 wt. % PPS Melt Blown Fibers With PPP Staple Fibers

A melt-blowing apparatus as shown generally in Fig. 1A was used to prepare nonwoven fibrous structures. A 20 inch (50.8 cm) wide melt blowing die of conventional film fibrillation configuration was set up, driven by a melt extruder of conventional type operated at a temperature of 320 °C. The die possessed orifices each 0.015 (0.38 mm) in diameter.
Poly(phenylene sulfide) (PPS) in the form of pellets commercially available as CELANESE FORTRON® 0203 from Celanese Corporation (Irving, TX) were hopper fed into the melt extruder. An extrusion pressure of 177 psi (1.22 MPa) was applied by the melt extruder to produce a melt extrusion rate of 20 pounds/hour (about 9.08 kg/hour).
In-flight heat treatment using air heated to 600 °F (315 °C) and directed onto the extruded fibers immediately upon exiting the die was carried out as described in Pub. U.S. Pat. App. No. 2016/0298266 A1. The heat-treated fibers were directed towards a drum collector, and between the heated air ports and the drum collector, crimped PPS staple fibers were dispensed into the melt-blown fibers. The crimped staple fibers were approximately 20 microns in diameter and 38 mm long, commercially available from Fiber Innovation Technology, Inc. (Johnson City, TN).

Sufficient staple fibers were dispensed so as to constitute 50% by weight of the final fabric. The surface speed of the drum collector was 6 feet/minute (1.83 m/min), so that the basis weight of the collected fabric was 250 g/m², and the melt-blown fabric was taken off the drum collector and wound around a core at a wind-up stand.

This melt-blown fabric was subjected to three standardized fire-resistance tests, namely UL 94 V0, FAR 25.853 (a), and FAR 25.856 (a). The material was able to pass these tests.

The samples of Example 1 were also sent to an independent smoke generation and smoke toxicity certification company (Herb Curry Inc., Mt. Vernon, IN). The smoke generation tests followed Airbus® standard test method AITM20007A. The smoke toxicity tests followed Airbus® standard test method AITM 3-0005, Issue 2. Table 1 summarizes the results from these tests. Both smoke generation and smoke toxicity are 2 orders of magnitude less than the maximum allowable value. Thus, the nonwoven fibrous structure of Example 1 meets or exceeds the smoke generation and smoke toxicity specifications required for use in commercial aircraft insulation articles.

**Table 1: Smoke and Toxicity Tests Results for Example 1**

| Following Airbus® Standards AITM20007A (Smoke), and AITM 3-0005, Issue 2 (Toxicity) | | |
|---|---|---|
| **Test Parameter** | **Maximum Level Allowed Under Standard** | **Tested Level (Average for 3 Measurements)** |
| Smoke density after 4 min | 200 | 5 |
| HCN (ppm) | 150 | <1 |
| CO (ppm) | 1000 | 19 |
| $SO_2$ (ppm) | 100 | 8 |
| $NO/NO_2$ (ppm) | 100 | 2 |
| HF (ppm) | 100 | 2 |
| HCl (ppm) | 150 | 2.5 |

Examples 2 to 9

Other Examples similar to Example 1 were performed, with the variations presented as shown in Table 2.

**Table 2: Examples of PPS Based Fire-resistant Nonwoven Fibrous Webs**

| Example | Melt-blown Resin | Optional Staple Fibers | Weight Percentage of Staple Fibers (Wt. %) | Basis Weight (g/m²) | Mean Melt Blown Fiber Diameter (μm) | Fire-Resistance Tests Passed |
|---|---|---|---|---|---|---|
| 2 | FORTRON PPS 0203 | N/A | 0 | 120 | 4.6 | UL94 V0 FAR 25.853(a) FAR 25.856(a) |
| 3 | FORTRON PPS 0203 | PPS staple fibers | 20% | 500 | 5 | UL94 V0 FAR 25.853(a) FAR 25.856(a) |
| 4 | FORTRON PPS 0203 | PPS staple fibers | 35% | 250 | 3.1 | UL94 V0 FAR 25.853(a) FAR 25.856(a) |

(continued)

| Example | Melt-blown Resin | Optional Staple Fibers | Weight Percentage of Staple Fibers (Wt. %) | Basis Weight (g/m²) | Mean Melt Blown Fiber Diameter (μm) | Fire-Resistance Tests Passed |
|---|---|---|---|---|---|---|
| 5 | FORTRON PPS 0203 | PPS staple fibers | 50% | 500 | 3.1 | UL94 V0 FAR 25.853(a) FAR 25.856(a) |
| 6 | FORTRON PPS 0203 | PPS staple fibers | 60% | 250 | 4.6 | UL94 V0 FAR 25.853(a) FAR 25.856(a) |
| 7 | FORTRON PPS 0203 | 50 wt. % PPS staple fibers + 50 wt. % Oxidized PAN fiber | 50% | 500 | 4.6 | UL94 V0 FAR 25.853(a) FAR 25.856(a) |
| 8 | FORTRON PPS 0203 | 30% wt. % PPS staple fibers + 70% wt. % Oxidized PAN fiber | 65% | 500 | 4.6 | UL94 V0 FAR 25.853(a) FAR 25.856(a) |
| 9 | N/A | Needle-punched PPS melt-blown staple fibers | 100 % | 500 | 4.6 | c FAR 25.853(a) |

Example 10 - Formation of fabric with mixed PPS and PET melt-blown fibers

A 20 inch (50.8 cm) wide melt blowing die of conventional drilled orifice configuration was set up, and fed with a melt extruder of conventional type operated at a temperature of 320 °C. A blend of poly(phenylene sulfide) (PPS) resin pellets (CELANESE FORTRONO 0203) and Poly(ethylene) terephthalate (PET) resin pellets was fed into the extruder. The weight blending ratio of PPS and PET was 4:1.

In-flight heat treatment using air heated to 600°F (315°C) and directed onto the extruded fibers immediately upon exiting the die was carried out as described in U.S. Pat. Pub. No. 2016/0298266 A1. The heat-treated fibers were directed towards a drum collector between the heated air ports and the drum collector. The surface speed of the drum collector was 12 feet/minute (3.67 m/min), so that the basis weight of the collected fabric was 120 g/m² and the melt-blown material was taken off the drum collector and wound around a core using a wind-up stand.

This resulting melt-blown material was subjected to one fire-resistance test, namely UL 94 V0. The fabric material was able to pass the UL 94 V0 fire-resistance test.

Reference throughout this specification to "one embodiment," "certain embodiments," "one or more embodiments" or "an embodiment," whether or not including the term "exemplary" preceding the term "embodiment," means that a particular feature, structure, material, or characteristic described in connection with the embodiment is included in at least one embodiment of the presently described present disclosure. Thus, the appearances of the phrases such as "in one or more embodiments," "in certain embodiments," "in one embodiment" or "in an embodiment" in various places throughout this specification are not necessarily referring to the same embodiment of the presently described present disclosure. Furthermore, the particular features, structures, materials, or characteristics may be combined in any suitable manner in one or more embodiments.

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that this disclosure is not to be unduly limited to the illustrative embodiments set forth hereinabove. Furthermore, all publications, published patent applications and issued patents referenced herein are incorporated by reference in their entirety to the same extent as if each individual publication or patent was specifically and individually indicated to be incorporated by reference. Various exemplary embodiments have been described. These and other embodiments are within the scope of the following claims.

## Claims

1. A nonwoven fibrous structure comprising:

   a plurality of staple fibers, wherein the plurality of staple fibers are non-melt-blown fibers;
   a plurality of melt-blown fibers comprising poly(phenylene sulfide) in an amount sufficient for the nonwoven fibrous structure to exhibit fire-resistance by passing one or more test selected from UL 94 V0, FAR 25.853 (a), FAR 25.856 (a), AITM20007A, and AITM 3-0005, without any halogenated flame-retardant additive, wherein the nonwoven fibrous structure is dimensionally stable and exhibits a Shrinkage less than 15%, optionally wherein the plurality of melt-blown fibers do not contain a nucleating agent in an amount effective to achieve nucleation.

2. The nonwoven fibrous structure of claim 1, wherein the plurality of staple fibers comprise (polyphenylene sulfide) staple fibers, non-heat-stabilized poly(ethylene) terephthalate staple fibers, heat-stabilized poly(ethylene) terephthalate staple fibers, poly(ethylene) naphthalate staple fibers, oxidized poly(acrylonitrile) staple fibers, aromatic polyaramide staple fibers, glass staple fibers, ceramic staple fibers, metal staple fibers, carbon staple fibers, or a combination thereof.

3. The nonwoven fibrous structure of claim 1, wherein the plurality of staple fibers make-up no more than 90 wt. % of the weight of the nonwoven fibrous structure.

4. The nonwoven fibrous structure of claim 1, wherein the plurality of melt-blown fibers further comprise a thermoplastic semi-crystalline (co)polymer selected from the group consisting of poly(ethylene) terephthalate, poly(butylene) terephthalate, poly(ethylene) naphthalate, poly(lactic acid), poly(hydroxyl) butyrate, poly(trimethylene) terephthalate, polycarbonate, polyetherimide (PEI), or a combination thereof.

5. The nonwoven fibrous structure of claim 4, wherein the amount of the thermoplastic semi-crystalline (co)polymer is no more than 50 wt. % of the weight of the plurality of melt-blown fibers.

6. The nonwoven fibrous structure of claim 4, wherein the plurality of melt-blown fibers further comprise at least one thermoplastic non-crystalline (co)polymer in an amount no more than 15 wt. % of the weight of the nonwoven fibrous structure.

7. The nonwoven fibrous structure of claim 1, further comprising a plurality of particulates, optionally wherein the plurality of particulates include inorganic particulates.

8. The nonwoven fibrous structure of claim 7, wherein the plurality of particulates comprise flame-retardant particulates, intumescent particulates, or a combination thereof.

9. The nonwoven fibrous structure of claim 7, wherein the plurality of particulates are present in an amount no greater than 40 wt. % based on the weight of the nonwoven fibrous structure.

10. The nonwoven fibrous structure of claim 1, wherein the nonwoven fibrous structure is selected from the group consisting of mats, webs, sheets, scrims, fabrics, or a combination thereof.

11. An article comprising the nonwoven fibrous structure of claim 1, wherein the article is selected from the group consisting of a thermal insulation article, an acoustic insulation article, a fluid filtration article, a wipe, a surgical drape, a wound dressing, a garment, a respirator, or a combination thereof.

12. The article of claim 11, wherein the thickness of the nonwoven fibrous structure is from 0.5 cm to 10.5 cm.

13. A process of making a dimensionally-stable, fire-resistant nonwoven fibrous structure of any one of claims 1-10, comprising:

a) forming a plurality of melt-blown fibers by passing a molten stream comprising polyphenylene sulfide through a plurality of orifices of a melt-blowing die;
b) subjecting at least a portion of the melt-blown fibers of step (a) to a controlled in-flight heat treatment operation immediately upon exit of the melt-blown fibers from the plurality of orifices, wherein the controlled in-flight heat treatment operation takes place at a temperature below a melting temperature of the portion of the melt-blown fibers for a time sufficient to achieve stress relaxation of at least a portion of the molecules within the portion of the fibers subjected to the controlled in-flight heat treatment operation; and
c) collecting at least some of the portion of the melt-blown fibers subjected to the controlled in-flight heat treatment operation of step (b) on a collector to form the non-woven fibrous structure.

**Patentansprüche**

1. Eine Vliesfaserstruktur, aufweisend:

eine Mehrzahl von Stapelfasern, wobei die Mehrzahl von Stapelfasern nicht schmelzgeblasene Fasern sind; eine Mehrzahl von schmelzgeblasene Fasern, aufweisend Poly(phenylensulfid) in einer Menge, die ausreicht, damit die Vliesfaserstruktur Feuerbeständigkeit vorweist, durch Bestehen eines oder mehrerer Tests, die aus UL 94 V0, FAR 25.853 (a), FAR 25.856 (a), AITM20007A, und AITM 3-0005 ausgewählt sind, ohne jeglichen halogenierten flammhemmenden Zusatzstoff, wobei die Vliesfaserstruktur formstabil ist und eine Schrumpfung von weniger als 15 % vorweist, optional wobei die Mehrzahl von schmelzgeblasenen Fasern keinen Keimbildner in einer Menge enthält, die wirksam ist, um Keimbildung zu erreichen.

2. Die Vliesfaserstruktur nach Anspruch 1, wobei die Mehrzahl von Stapelfasern (Polyphenylensulfid)-Stapelfasern, nicht hitzebeständige Poly(ethylen)terephthalat-Stapelfasern, hitzebeständige Poly(ethylen)terephthalat-Stapelfasern, Poly(ethylen)naphthalat-Stapelfasern, oxidierte Poly(acrylnitril)-Stapelfasern, aromatische Polyaramid-Stapelfasern, Glasstapelfasern, Keramikstapelfasern, Metallstapelfasern, Kohlenstoffstapelfasern oder eine Kombination davon aufweisen.

3. Die Vliesfaserstruktur nach Anspruch 1, wobei die Mehrzahl von Stapelfasern nicht mehr als 90 Gew.-% des Gewichts der Vliesfaserstruktur ausmachen.

4. Die Vliesfaserstruktur nach Anspruch 1, wobei die Mehrzahl von schmelzgeblasenen Fasern ferner ein thermoplastisches halbkristallines (Co)polymer aufweisen, das aus der Gruppe ausgewählt ist, bestehend aus Poly(ethylen)terephthalat, Poly(butylen)terephthalat, Poly(ethylen)naphthalat, Poly(milchsäure), Poly(hydroxyl)butyrat, Poly(trimethylen)terephthalat, Polycarbonat, Polyetherimid (PEI) oder einer Kombination davon.

5. Die Vliesfaserstruktur nach Anspruch 4, wobei die Menge des thermoplastischen halbkristallinen (Co)polymers nicht mehr als 50 Gew.-% des Gewichts der Mehrzahl von schmelzgeblasenen Fasern beträgt.

6. Die Vliesfaserstruktur nach Anspruch 4, wobei die Mehrzahl von schmelzgeblasenen Fasern ferner mindestens ein thermoplastisches nicht kristallines (Co)polymer in einer Menge von nicht mehr als 15 Gew.-% des Gewichts der Vliesfaserstruktur aufweisen.

7. Die Vliesfaserstruktur nach Anspruch 1, ferner aufweisend eine Mehrzahl von Partikeln, optional wobei die Mehrzahl von Partikeln anorganische Partikel einschließen.

8. Die Vliesfaserstruktur nach Anspruch 7, wobei die Mehrzahl von Partikeln flammhemmende Partikel, intumeszierende Partikel oder eine Kombination davon aufweisen.

9. Die Vliesfaserstruktur nach Anspruch 7, wobei die Mehrzahl von Partikeln in einer Menge von nicht mehr als 40 Gew.-% basierend auf dem Gewicht der Vliesfaserstruktur vorhanden sind.

10. Die Vliesfaserstruktur nach Anspruch 1, wobei die Vliesfaserstruktur aus der Gruppe ausgewählt ist, bestehend aus Matten, Bahnen, Platten, Gittergeweben, Stoffen oder einer Kombination davon.

**11.** Ein Gegenstand, aufweisend die Vliesfaserstruktur nach Anspruch 1, wobei der Gegenstand aus der Gruppe ausgewählt ist, bestehend aus einem Wärmedämmungsgegenstand, einem Schalldämmungsgegenstand, einem Fluidfiltrationsgegenstand, einem Wischtuch, einem chirurgischen Abdecktuch, einer Wundauflage, einem Kleidungsstück, einem Atemgerät oder einer Kombination davon.

**12.** Der Gegenstand nach Anspruch 11, wobei die Dicke der Vliesfaserstruktur von 0.5 cm bis 10.5 cm beträgt.

**13.** Ein Verfahren zum Herstellen einer formstabilen, feuerbeständigen Vliesfaserstruktur nach einem der Ansprüche 1 bis 10, aufweisend:

a) Bilden einer Mehrzahl von schmelzgeblasenen Fasern durch Leiten eines geschmolzenen Stroms, aufweisend Polyphenylensulfid, durch eine Mehrzahl von Öffnungen eines schmelzgeblasenen Chips;
b) Unterziehen mindestens eines Abschnitts der schmelzgeblasenen Fasern von Schritt (a) einem kontrollierten Hitzebehandlungsvorgang im Flug unmittelbar nach einem Austritt der schmelzgeblasenen Fasern aus der Mehrzahl von Öffnungen, wobei der kontrollierte Hitzebehandlungsvorgang im Flug bei einer Temperatur unterhalb einer Schmelztemperatur des Abschnitts der schmelzgeblasenen Fasern für eine Zeit stattfindet, die ausreicht, um eine Spannungsrelaxation mindestens eines Abschnitts der Moleküle innerhalb des Abschnitts der Fasern zu erreichen, der dem kontrollierten Hitzebehandlungsvorgang im Flug unterzogen wird; und
c) Sammeln mindestens eines Teils des Abschnitts der schmelzgeblasenen Fasern, der dem kontrollierten Hitzebehandlungsvorgang im Flug von Schritt (b) auf einem Sammler unterzogen wird, um die Vliesfaserstruktur zu bilden.

## Revendications

**1.** Structure fibreuse non tissée, comprenant:

une pluralité de fibres discontinues, la pluralité de fibres discontinues étant des fibres non soufflées en fusion;
une pluralité de fibres soufflées en fusion comprenant du poly(sulfure de phénylène) en une quantité suffisante pour que la structure fibreuse non tissée présente une résistance au feu en réussissant un ou plusieurs tests choisis parmi UL 94 V0, FAR 25.853 (a), FAR 25.856 (a), AITM20007A et AITM 3-0005, sans aucun additif ignifugeant halogéné, la structure fibreuse non tissée étant dimensionnellement stable et présentant un retrait inférieur à 15%, facultativement la pluralité de fibres soufflées en fusion ne contenant pas d'agent nucléant en une quantité efficace pour obtenir une nucléation.

**2.** Structure fibreuse non tissée selon la revendication 1, dans laquelle la pluralité de fibres discontinues comprennent des fibres discontinues de (sulfure de polyphénylène), des fibres discontinues de poly(éthylène) téréphtalate non stabilisées à la chaleur, des fibres discontinues de poly(éthylène) téréphtalate stabilisées à la chaleur, des fibres discontinues de poly(éthylène) naphtalate, des fibres discontinues de poly(acrylonitrile) oxydé, des fibres discontinues de polyaramide aromatique, des fibres discontinues de verre, des fibres discontinues de céramique, des fibres discontinues de métal, des fibres discontinues de carbone, ou une combinaison de celles-ci.

**3.** Structure fibreuse non tissée selon la revendication 1, dans laquelle la pluralité de fibres discontinues ne constituent pas plus de 90% en poids du poids de la structure fibreuse non tissée.

**4.** Structure fibreuse non tissée selon la revendication 1, dans laquelle la pluralité de fibres soufflées en fusion comprennent en outre un (co)polymère semi-cristallin thermoplastique choisi dans le groupe constitué par poly(éthylène) téréphtalate, poly(butylène) téréphtalate, poly(éthylène) naphtalate, poly(acide lactique), poly(hydroxyl) butyrate, poly(triméthylène) téréphtalate, polycarbonate, polyétherimide (PEI), ou une combinaison de ceux-ci.

**5.** Structure fibreuse non tissée selon la revendication 4, dans laquelle la quantité du (co)polymère semi-cristallin thermoplastique n'est pas supérieure à 50% en poids du poids de la pluralité de fibres soufflées en fusion.

**6.** Structure fibreuse non tissée selon la revendication 4, dans laquelle la pluralité de fibres soufflées en fusion comprennent en outre au moins un (co)polymère non cristallin thermoplastique en une quantité de pas plus de 15% en poids du poids de la structure fibreuse non tissée.

**7.** Structure fibreuse non tissée selon la revendication 1, comprenant en outre une pluralité de particules, facultativement dans lequel la pluralité de particules comportent des particules inorganiques.

8. Structure fibreuse non tissée selon la revendication 7, dans laquelle la pluralité de particules comprennent des particules ignifugeantes, des particules intumescentes, ou une combinaison de celles-ci.

9. Structure fibreuse non tissée selon la revendication 7, dans laquelle la pluralité de particules sont présentes en une quantité n'excédant pas 40% en poids en fonction du poids de la structure fibreuse non tissée.

10. Structure fibreuse non tissée selon la revendication 1, la structure fibreuse non tissée étant choisie dans le groupe constitué par mats, nappes, feuilles, gazes, tissus, ou une combinaison de ceux-ci.

11. Article comprenant la structure fibreuse non tissée selon la revendication 1, l'article étant choisi dans le groupe constitué par un article d'isolation thermique, un article d'isolation acoustique, un article de filtration de fluide, une lingette, un champ chirurgical, un pansement, un vêtement, un masque respiratoire, ou une combinaison de ceux-ci.

12. Article selon la revendication 11, dans lequel l'épaisseur de la structure fibreuse non tissée va de 0.5cm à 10.5cm.

13. Procédé de fabrication d'une structure fibreuse non tissée résistante au feu, dimensionnellement stable selon l'une quelconque des revendications 1 à 10, comprenant:

a) la formation d'une pluralité de fibres soufflées en fusion en faisant passer un courant fondu comprenant du sulfure de polyphénylène à travers une pluralité d'orifices d'une filière de soufflage en fusion;
b) le fait de soumettre au moins une partie des fibres soufflées en fusion de l'étape (a) à une opération commandée de traitement thermique au vol immédiatement lors de la sortie des fibres soufflées en fusion de la pluralité d'orifices, l'opération commandée de traitement thermique au vol se déroulant à une température en dessous d'une température de fusion de la partie des fibres soufflées en fusion pendant une période suffisante pour obtenir une relaxation de contrainte d'au moins une partie des molécules au sein de la partie des fibres soumise à l'opération commandée de traitement thermique au vol; et
c) la collecte d'au moins certaines de la partie des fibres soufflées en fusion soumise à l'opération commandée de traitement thermique au vol de l'étape (b) sur un collecteur pour former la structure fibreuse non tissée.

**FIG. 1A**

**FIG. 1B**

## REFERENCES CITED IN THE DESCRIPTION

**Patent documents cited in the description**

- US 6110589 A
- JP 2008238493 A
- JP 2009228152 A
- WO 2013155420 A
- US 6607624 B, Berrigan
- US 5332426 A, Tang
- US 4818464 A, Lau
- US 4100324 A, Anderson
- US 4118531 A
- US 3971373 A
- US 4813948 A
- US 4215682 A
- US 5641555 A
- US 5643507 A
- US 5658640 A
- US 5658641 A
- US 6420024 B
- US 6645618 B
- US 6849329 B
- US 7691168 B
- US 4273879 A
- US 3516941 A, Matson
- US 6740137 B
- US 5496507 A
- US 5908598 A
- US 6375886 B1
- US 6406657 B1
- US 6454986 B1
- US 6743464 B1
- US 5401446 A
- US 6119691 A
- US 4798850 A
- US 6397458 B1
- US 20160298266 A1

**Non-patent literature cited in the description**

- **VAN WENTE.** Superfine Thermoplastic Fibers. *Industrial Engineering Chemistry,* 1956, vol. 48, 1342
- **VAN WENTE, A. ; BOONE, C. D. ; FLUHARTY, E. L.** Manufacture of Superfine Organic Fibers. *Report No. 4364 of the Naval Research Laboratories,* 25 May 1954
- **F. L. BINSBERGEN.** Natural and Artificial Heterogeneous Nucleation in Polymer Crystallization. *Journal of Polymer Science: Polymer Symposia,* 1977, vol. 59 (1), 11-29